# EUROPÄISCHE PATENTSCHRIFT

(11) **EP 2 836 740 B1**
(45) Veröffentlichungstag und Bekanntmachung des Hinweises auf die Patenterteilung: **08.11.2017**
(21) Anmeldenummer: 13707848.1
(22) Anmeldetag: 04.03.2013
(51) Int. Cl.: F16H 3/00, F16H 3/097, B60T 1/087, F16H 47/06, B60K 6/48, B60K 17/08, B60K 17/02

(54) **ANTRIEBSVORRICHTUNG EINES FAHRZEUGS UND VERFAHREN ZU DESSEN BETRIEB**
DRIVE UNIT FOR A VEHICLE, AND OPERATING METHOD THEREFOR
DISPOSITIF D'ENTRAÎNEMENT D'UN VÉHICULE ET PROCÉDÉ DE FONCTIONNEMENT DE CE DERNIER

(30) Priorität: 11.04.2012 DE 102012205823
(43) Veröffentlichungstag der Anmeldung: 18.02.2015
(73) Patentinhaber: ZF Friedrichshafen AG, 88046 Friedrichshafen (DE)
(72) Erfinder: BORNTRAEGER, Kai, 88085 Langenargen (DE); KALTENBACH, Johannes, 88048 Friedrichshafen (DE)
(86) Internationale Anmeldenummer: PCT/EP2013/054232
(87) Internationale Veröffentlichungsnummer: WO 2013/152892

(56) Entgegenhaltungen:
- EP-A2- 2 025 550
- WO-A1-2007/124711
- WO-A1-2009/039629
- DE-A1- 4 122 628
- DE-A1- 19 817 865
- US-A1- 2006 225 527
- US-A1- 2010 078 281
- US-A1- 2010 173 746

## Beschreibung

Die Erfindung betrifft eine Antriebsvorrichtung eines Fahrzeugs gemäß dem Oberbegriff des Patentanspruchs 1, sowie ein Verfahren zu dessen Betrieb gemäß dem Oberbegriff des Patentanspruchs 9. Antriebsvorrichtungen von Fahrzeugen mit Schaltgetrieben, die zwei Teilgetriebe oder in ihrer Funktionsweise vergleichbare getrennte, meist automatisch oder automatisiert schaltbare Getriebestränge umfassen, sind bereits bekannt. Bestimmte Funktionen eines solchen Antriebs sind in der Regel nur jeweils einem der beiden Teilgetriebe zugeordnet oder über dieses darstellbar, so dass unsymmetrische Beanspruchungen an den Teilgetrieben auftreten können oder bestimmte Funktionen sich gegenseitig ausschließen oder nur mit Einschränkungen zur Verfügung stehen.

Bei einem Doppelkupplungsgetriebe wird beispielsweise meistens eine von zwei eingangsseitigen Lastschaltkupplungen auch stets als Anfahrkupplung eingesetzt, da sich der bevorzugte Anfahrgang in dem betreffenden Teilgetriebe befindet. Unterliegt der Antrieb häufigen Anfahrvorgängen, wie beispielsweise bei einem Stadtbus, kann dies zu einer thermischen Überlastung mit vorzeitigem Verschleiß der betreffenden Kupplung führen.

Bei einem aus einem Doppelkupplungsgetriebe abgeleiteten oder ähnlichen Hybridantrieb können Funktionszuordnungen der Teilgetriebe bestimmte Einschränkungen bedingen. So ist es beispielsweise aus einem Generatorbetrieb einer einem der Teilgetriebe zugeordneten elektrischen Maschine heraus nicht möglich, verzögerungsfrei in einen Anfahrvorgang zu wechseln. Ebenso ist während eines Generatorbetriebs in der Regel kein Dauerkriechen möglich, also ein Fahren mit konstanter niedriger Geschwindigkeit. Weitere Einschränkungen können sich beim Starten des Verbrennungsmotors ausgehend von einem elektrischen Fahrbetrieb ergeben. Ein Start des Verbrennungsmotors mit Erhalt der Zugkraft im Antriebsstrang bedingt in der Regel eine zweite elektrische Maschine als Startergenerator oder eine zusätzliche Reibungskupplung, die dann jedoch für häufig wiederkehrende Anfahrvorgänge entsprechend groß ausgelegt sein muss.

Weiterhin ist es bekannt, Fahrzeuggetriebe, die hohen Belastungen ihrer Anfahr- und Bremseinrichtungen unterliegen, wie beispielsweise Lastschaltautomatgetriebe für Stadtbusse, bei denen häufige, kurz aufeinanderfolgende Anfahr- und Bremsvorgänge vorkommen, mit einem hydrodynamischen Drehmomentwandler als verschleißfreiem Anfahrelement und gegebenenfalls mit einer zusätzlichen verschleißfreien Dauerbremseinrichtung wie einem hydrodynamischen Retarder auszustatten. Bei solchen hydrodynamischen Übertragungselementen wird die mechanische Energie einer Antriebswelle unter Wärmeerzeugung in die kinetische Energie eines Fluids und wieder zurück in die mechanische Energie einer Abtriebswelle umgewandelt. Eine einfache Strömungskupplung mit einem antreibenden Pumpenrad und einem abtreibenden Turbinenrad wirkt dabei wie ein stufenloses Getriebe mit einer eingangs- und ausgangseitigen Drehzahldifferenz. Bei einem Drehmomentwandler sorgt ein zusätzliches Leitrad durch eine Umlenkung der Strömung in Richtung Pumpenrad für eine Momentenüberhöhung bei der Drehmomentwandlung. Bei einem Retarder wird durch ein feststehendes Schaufelrad, den Stator, eine Bremswirkung auf das antreibende Rad, den Rotor, erzeugt und dadurch eine Bremswirkung auf den Antriebsstrang bewirkt.

Um den erforderlichen baulichen Aufwand und die Herstellkosten gering zu halten, sind bereits sogenannte Anfahrretarder bekannt, welche die Funktionen eines hydrodynamischen Anfahrelements, wie eine Strömungskupplung oder einen Drehmomentwandler, und eines hydrodynamischen Retarders in einer Baueinheit kombinieren.

Bei einem aus der DE 100 45 337 A1 bekannten solchen Antriebssystem wird eine hydrodynamische Kupplung mit einem Pumpenrad und einem Turbinenrad genutzt, wobei das Pumpenrad mit einem Antriebsmotor verbunden ist und eine Reibungskupplung zur Überbrückung von Pumpenrad und Turbinenrad parallel geschaltet ist, und wobei das Turbinenrad über einen Freilauf mit einem Getriebeeingang eines nachgeordneten Schaltgetriebes verbunden sowie über eine Turbinenbremse gegenüber einem Gehäuse feststellbar ist. Beim Anfahren wird die Leistung über den hydrodynamischen Kreislauf auf den Getriebeeingang übertragen. Beim Bremsen wird das Turbinenrad festgebremst und die Reibungskupplung geschlossen. Durch das Befüllen der hydrodynamischen Kupplung mit einem Fluid arbeitet diese dann als ein Primärretarder.

Aus der EP 0 879 370 B1 ist eine Getriebebaueinheit bekannt, mit einem hydraulischen Getriebeteil, der ein Primärschaufelrad und ein Sekundärschaufelrad aufweist, die zusammen einen mit Fluid befüllbaren Arbeitsraum bilden, und mit einem separat antriebstechnisch dahinter angeordneten mechanischen Getriebeteil als eigentliches Fahrzeuggetriebe. Der mechanische Getriebeteil kann beispielsweise ein Planetengetriebe mit einem oder mehreren gekoppelten Planetenradsätzen und mehreren Vorwärtsgangstufen und Rückwärtsgangstufen sein. Der hydraulische Getriebeteil ist in zwei Betriebszuständen betreibbar, in einem Fahrzustand als hydrodynamische Kupplung und in einem Bremszustand als hydrodynamischer Retarder. Bei einem Anfahrvorgang arbeitet das Primärschaufelrad als Pumpenrad, das Sekundärschaufelrad als Turbinenrad. Bei einem Bremsvorgang wird das Primärschaufelrad festgehalten und arbeitet als Stator, und das Sekundärschaufelrad wird mit dem Getriebe verbunden und arbeitet nun aufgrund der entgegengesetzten Strömungsrichtung rückwärtsdrehend als Rotor. Dem hydraulischen Getriebeteil sind mehrere Schaltelemente zugeordnet, die zusammen mit weiteren Schaltelementen des mechanischen Getriebeteils jeweils auf die Schaufelräder wirksam sind und eines der Schaufelräder oder beide Schaufelräder mit dem Getriebe koppeln, überbrücken oder festhalten. Ein Fahrbetrieb wird jeweils mittels einer Vorwärtsgangstufe oder einer Rückwärtsgangstufe bei offenem oder bei überbrücktem Anfahrretarder realisiert. Ein Bremsbetrieb wird jeweils mittels einer Rückwärtsgangstufe bei festgehaltenem Primärschaufelrad realisiert.

Aus der DE 198 17 865 A1 ist ein Anfahrretarder mit einem hydrodynamischen Retarder und mit einem Planetenradsatz bekannt, die eine Baueinheit bilden. Der Anfahrretarder ermöglicht einen hydrodynamischen Anfahrvorgang mit einer zusätzlichen Anfahrübersetzung sowie einen hydrodynamischen Bremsbetrieb. Der Retarder umfasst ein drehbares Rotorschaufelrad und ein feststehendes Statorschaufelrad. Der Rotor ist mit einem Sonnenrad des Planetenradsatzes verbunden oder verbindbar und mit einem Planetenträger verbindbar oder verbunden. Der Planetenträger ist mit einer motorseitigen Antriebswelle oder einer getriebeseitigen Abtriebswelle des Planetenradsatzes verbunden oder verbindbar. Entsprechend ist ein Hohlrad mit der Abtriebswelle oder der Antriebswelle verbunden. Der Retarder ist als ein sogenannter doppelflutiger Retarder ausgebildet. Dieser weist zwei Strömungskreisläufe auf, mit zwei äußeren sich axial gegenüberstehenden Statoren, jeweils mit nach innen zeigender Beschaufelung, und einem axial inneren Rotor mit beidseitiger Beschaufelung. Damit kann der Rotor in seinen beiden möglichen Drehrichtungen jeweils eine ausreichend hohe Bremsleistung erzeugen.

Aus der WO 2009/039629 A1 ist ein Getriebe mit einer Hauptwelle, einer ersten und einer zweiten Eingangswelle und einer ersten Kupplung, die die Hauptwelle und die erste Kupplung antreibend koppelt, sowie eine zweite Kupplung, die die Hauptwelle und die zweite Eingangswelle antreibend koppelt, bekannt. Das Getriebe umfasst entweder einen Drehmomentwandler der selektiv durch die erste Eingangswelle angetrieben wird, einen ersten Zahnradsatz für den ersten Gang, der durch den Drehmomentwandler angetrieben wird, oder einen Drehmomentwandler, der selektiv durch einen ersten Zahnradsatz für den erstens Gang angetrieben wird, wobei der erste Zahnradsatz für den ersten Gang durch die Eingangswelle angetrieben wird.

Aus der EP 2 025 550 A2 ist ein Kraftfahrzeug-Anfahrelement bekannt in Form einer Kupplung mit einer rotierend antreibbaren Primärseite und einer von der Primärseite hydrodynamisch oder elektrodynamisch rotierend antreibbaren Sekundärseite, umfassend eine Bremseinrichtung zum Verzögern und/oder Stationärhalten der Sekundärseite, wobei die Bremseinrichtung eine elektrische Maschine ist, welche einen Stator und einen Rotor aufweist, welche über eine elektromagnetische Wechselwirkung miteinander gekoppelt sind, und wobei der Rotor mit der Sekundärseite der regelbaren Kupplung drehfest verbunden oder verbindbar ist, um die Sekundärseite zu verzögern.

Vor diesem Hintergrund liegt der Erfindung die Aufgabe zugrunde, eine verbesserte Antriebsvorrichtung eines Fahrzeugs mit Teilgetrieben zu schaffen, der insbesondere im Hinblick auf häufige Anfahr- und Anhaltvorgänge komfortabel und langlebig ist. Eine weitere Aufgabe ist es, ein Verfahren zum Betrieb einer solchen Antriebsvorrichtung anzugeben.

Die Lösung dieser Aufgabe ergibt sich aus den Merkmalen der unabhängigen Patentansprüche, während vorteilhafte Ausgestaltungen und Weiterbildungen der Erfindung den Unteransprüchen entnehmbar sind.

Der Erfindung liegt die Erkenntnis zugrunde, dass ein Fahrzeuggetriebe, beim dem eine Eingangskupplung sowohl als Lastschalt-mittel als auch als Anfahrmittel eingesetzt wird, wie bei Doppelkupplungsgetrieben und Hybridgetrieben üblich, durch ein zusätzliches hydrodynamisches Anfahrelement ergänzt werden kann. Ein solches hydrodynamisches Anfahrelement, welches an einem Getriebepfad mit einem Anfahrgang wirksam ist, kann die besagte Lastschaltkupplung bzw. die elektrische Maschine von der Funktion eines Anfahrelements entkoppeln. Die Lastschaltkuppiung ist damit im Fahrbetrieb gegen erhöhten Verschleiß geschützt beziehungsweise flexibler einsetzbar.

Demnach geht die Erfindung aus von einer Antriebsvorrichtung eines Fahrzeugs, mit einem Verbrennungsmotor und mit einem Getriebe, das als mehrstufiges Schaltgetriebe mit zwei Teilgetrieben und jeweils einer separaten Getriebeeingangswelle ausgebildet ist, wobei einer ersten Getriebeeingangswelle eines ersten Teilgetriebes eine erste Kupplung, über die die erste Getriebeeingangswelle mit dem Verbrennungsmotor triebverbindbar ist, und wobei einer zweiten Getriebeeingangswelle eines zweiten Teilgetriebes eine zweite Kupplung zugeordnet ist, über die die zweite Getriebeeingangswelle mit dem Verbrennungsmotor triebverbindbar ist.

Zur Lösung der gestellten Aufgabe bezüglich der Vorrichtung sieht die Erfindung vor, dass der ersten Getriebeeingangswelle zusätzlich ein Anfahrelement zugeordnet ist, das zumindest ein hydrodynamisches Übertragungselement aufweist, welches ein erstes Funktionsrad und ein zweites Funktionsrad aufweist, die einen mit Fluid befüllbaren Arbeitsraum zur Erzeugung eines hydrodynamischen Übertragungsmoments bilden, so dass mit Hilfe des Anfahrelements zumindest eine Anfahrfunktion realisierbar ist, die auf das erste Teilgetriebe wirksam ist.

Zum Betreiben einer Antriebsvorrichtung eines Fahrzeugs, mit einem Verbrennungsmotor und mit einem Getriebe, das als mehrstufiges Schaltgetriebe mit zwei Teilgetrieben und jeweils einer separaten Getriebeeingangswelle ausgebildet ist, wobei einer ersten Getriebeeingangswelle eines ersten Teilgetriebes eine erste Kupplung, über die die erste Getriebeeingangswelle mit dem Verbrennungsmotor triebverbindbar ist, und wobei einer zweiten Getriebeeingangswelle eines zweiten Teilgetriebes eine zweite Kupplung zugeordnet ist, über die die zweite Getriebeeingangswelle mit dem Verbrennungsmotor triebverbindbar ist, sieht die Erfindung vor, dass mittels eines Anfahrelements zumindest eine hydrodynamische Anfahrfunktion durchgeführt wird, wobei das Anfahrelement der ersten Getriebeeingangswelle zugeordnet ist und ein hydrodynamisches Übertragungselement aufweist, welches ein erstes Funktionsrad und ein zweites Funktionsrad aufweist, die einen mit Fluid befüllbaren Arbeitsraum zur Erzeugung eines hydrodynamischen Übertragungsmoments bilden.

Diese Antriebsvorrichtung weist demnach ein Basisgetriebe mit zwei Teilgetrieben auf, bei dem an der Eingangswelle eines der beiden Teilgetriebe ein hydrodynamisches Anfahrelement angeordnet ist. Dadurch können die eingangs erwähnten unsymmetrische Belastungen oder Funktionseinschränkungen konventioneller Antriebsvorrichtungen weitestgehend vermieden werden, wodurch sich der Fahrkomfort verbessert und der Verschleiß verringert. Die Ausbildung der Antriebsvorrichtung mit zwei Teilgetrieben ermöglicht die Umgehung des hydrodynamischen Anfahrelements bei einem Fahrbetrieb bei Nutzung des zweiten Teilgetriebes, wodurch sich der Wirkungsgrad und die Wirtschaftlichkeit der Antriebsvorrichtung gegenüber einem Getriebe, bei dem ein hydrodynamisches Anfahrelement stets in den Leistungspfad einbezogen ist, verbessert. Das Basisgetriebe, bestehend aus dem Getriebe mit den zwei Teilgetrieben und dem hydrodynamischen Anfahrelement, ist insbesondere mit einem Doppelkupplungsmodul oder in einer nicht beanspruchten Variante auch mit einem Hybridmodul kombinierbar.

Das Basisgetriebe kann somit als Baukastenkomponente für ein Doppelkupplungsgetriebe genutzt werden, bei dem die Doppelkupplung als Lastschaltvorrichtung für eine zugkraftunterbrechungsfreie sequenzielle Schaltabfolge dient. Die Doppelkupplung bzw. eine der beiden Lastschaltkupplungen wird dabei nicht als Anfahrelement benötigt und somit auch nicht durch häufig wiederkehrende Anfahrvorgänge überbeansprucht. Diese Funktion erfüllt das hydrodynamische Anfahrelement, das ein verschleißfreies Anfahren in einem Gang des zugehörigen Teilgetriebes ermöglicht.

Das Basisgetriebe kann in einer nicht beanspruchten Variante auch als Baukastenkomponente für einen Hybridantrieb genutzt werden, bei dem eine elektrische Maschine, welche einem der beiden Teilgetriebe zugeordnet ist, eine Schaltfolge mit elektrischer Zugkraftunterstützung ermöglicht, indem diese elektrische Maschine eine entsprechende Lastschaltkupplung ersetzt. Die Anfahrfunktion wird wiederum durch das hydrodynamische Anfahrelement erfüllt. Dies hat den Vorteil, dass die elektrische Maschine unabhängig von einem Anfahrvorgang als Generator zum Aufladen eines elektrischen Speichers und/oder zur Versorgung elektrischer Verbraucher im Bordnetz betrieben werden kann.

Das Anfahrelement ist gemäß einer ersten beanspruchten Alternative als ein Anfahrretarder ausgebildet, mit einem hydrodynamischen Übertragungselement mit einem ersten drehbaren Funktionsrad und einem zweiten drehbaren Funktionsrad, mit einem Planetenradsatz mit einem Hohlrad, einem Sonnenrad und einem Planetenträger, wobei der Planetenträger mehrere Planetenräder führt, die mit dem Sonnenrad und dem Hohlrad im Verzahnungseingriff stehen, und mit einem Schaltelement zur Fixierung eines der beiden Funktionsräder, wobei das hydrodynamische Übertragungselement sowie der Planetenradsatz miteinander gekoppelt sind und gemeinsam eine Baueinheit bilden. Das Schaltelement kann als ein einfaches formschlüssiges Klauenschaltelement oder als eine reibschlüssige Bremse ausgebildet sein.

Nach einer Ausführungsform des Verfahrens kann vorgesehen sein, dass ein Anfahren mittels eines solchen Anfahrretarders durchgeführt wird, indem durch Befüllen des Arbeitsraums des Anfahrretarders ein hydrodynamisches Übertragungsmoment aufgebaut wird. Dabei ist eines der beiden Planetenradsatzelemente Hohlrad oder Sonnenrad als ein Antriebselement des Planetenradsatzes wirksam, welches durch den Antriebsmotor angetrieben wird. Das andere der beiden Planetenradsatzelemente Hohlrad oder Sonnenrad, welches mit dem ersten Funktionsrad drehfest verbunden ist und über das Schaltelement an einem drehfesten Bauteil feststellbar ist, wird bei einem Nulldurchgang seiner Drehzahl durch Schließen des Schaltelements festgestellt. Der Planetenträger, welcher mit dem zweiten Funktionsrad drehfest verbunden ist, ist als ein Abtriebselement des Planetenradsatzes wirksam, das die Getriebeeingangswelle des ersten Teilgetriebes antreibt.

Wenn der Arbeitsraum mit Fluid gefüllt oder teilgefüllt und das Schaltelement geöffnet ist, ist der Anfahrretarder als eine Strömungskupplung ohne Momentüberhöhung wirksam. Wenn der Arbeitsraum mit Fluid gefüllt oder teilgefüllt und das Schaltelement geschlossen ist, ist der Anfahrretarder als Retarder wirksam. Durch eine geeignete Kopplung mit dem Planetenradsatz wird erreicht, dass das Vorzeichen der Differenzdrehzahl an der Strömungskupplung im Anfahrbetrieb und im Retarderbetrieb gleich ist. Daher ist keine vergleichsweise aufwendige doppelflutige Auslegung der Strömungskupplung für beide Drehrichtungen erforderlich.

Entgegen den herkömmlichen Anfahrretardern bleibt bei dem Anfahrretarder gemäß der Erfindung eine Differenzdrehzahl zwischen den Funktionsrädern bestehen, wobei sich mit der Befüllung des Arbeitsraums das entgegen der Drehrichtung der Antriebsquelle rückwärts drehende antreibende Funktionsrad einem Nulldurchgang seiner Drehzahl annähert, während die Drehzahl des abtreibenden Funktionsrads mit der zugehörigen Getriebeeingangswelle entsprechend ansteigt, worauf sich das Fahrzeug bei eingelegtem Anfahrgang entsprechend in Bewegung setzt.

Ist ein entsprechend festgelegtes Drehzahlfenster bei einer Drehzahl annähernd Null erreicht, kann das Schaltelement lastfrei eingelegt werden, wodurch das zugehörige Funktionsrad festgebremst wird. Das hydrodynamische Übertragungselement ist dadurch von einer Strömungskupplungsstellung in eine Retarderstellung umgeschaltet. Wenn der Arbeitsraum anschließend entleert und der Retarder damit deaktiviert ist, wirkt der Planetenradsatz wie eine feste Eingangsübersetzung des betreffenden Teilgetriebes.

Außerdem kann bei dem Verfahren vorgesehen sein, dass ein Antriebsmoment des Verbrennungsmotors entsprechend abgesenkt wird, wenn nach dem Schließen des Schaltelements, durch zumindest teilweises Entleeren des Arbeitsraums das hydrodynamische Übertragungsmoment abgebaut wird.

Zweckmäßigerweise wird beim Abbau des Übertragungsmoments der Strömungskupplung gleichzeitig das Antriebsmoment des Verbrennungsmotors abgesenkt, um an der Eingangswelle des zugehörigen Teilgetriebes ein konstantes bzw. kontinuierlich veränderliches Getriebeeingangsmoment zu erhalten. Durch das Abbauen des hydrodynamischen Moments bei geschlossenem Schaltelement befindet sich der Anfahrretarder in einer Retarderstellung, er ist aber deaktiviert.

Zum Aktivieren des Retarders kann bei geschlossenem Schaltelement, und dadurch festgestelltem ersten Funktionsrad, durch Befüllen des Arbeitsraums ein hydrodynamisches Übertragungsmoment aufgebaut werden. Dadurch kann eine Bremswirkung auf den Antrieb erzeugt werden. Über eine Dosierung des Füllgrads des Arbeitsraums ist eine Dosierung des Bremsmoments möglich.

Die beiden Teilgetriebe bilden mit dem Anfahrretarder ein Basisgetriebe, dem, im Falle eines Doppelkupplungsgetriebes, eine Doppelkupplung antriebstechnisch vor- oder nachgelagert sein kann.

Bei einer Ausführungsform kann demnach vorgesehen sein, dass die beiden Teilgetriebe ein Doppelkupplungsgetriebe bilden, bei dem zwei Kupplungen vorhanden sind, wobei jeweils eine Kupplung einem Teilgetriebe zugeordnet ist, wobei die beiden Kupplungen als Doppelkupplung ausgebildet sind, dem Anfahrelement antriebstechnisch vorgelagert sind, eingangsseitig mit dem Verbrennungsmotor antriebsverbunden sind. Ausgangsseitig ist eine erste Kupplung über eine Kupplungsausgangswelle mit einem Eingangselement des Planetenradsatzes drehfest verbunden, während eine zweite Kupplung mit der zweiten Getriebeeingangswelle drehfest verbunden ist.

Weiter kann vorgesehen sein, dass bei einem Doppelkupplungsgetriebe mit Anfahrretarder und mit einer dem Anfahrretarder antriebstechnisch vorgelagerten Doppelkupplung eines der beiden Planetenradsatzelemente Hohlrad oder Sonnenrad mit dem ersten Funktionsrad des hydrodynamischen Übertragungselements drehfest verbunden ist sowie über das Schaltelement an einem ortsfesten Bauteil festsetzbar ist, dass das andere der beiden Planetenradsatzelemente Hohlrad oder Sonnenrad mit einer Ausgangswelle einer ersten Kupplung drehfest verbunden ist, dass der Planetenträger antriebsseitig mit dem zweiten Funktionsrad drehfest verbunden ist, und dass der Planetenträger abtriebsseitig mit der ersten Getriebeeingangswelle drehfest verbunden ist.

Dieser Antrieb ermöglicht bei geöffnetem Schaltelement und geschlossener erster Kupplung eine hydrodynamische Anfahrfunktion über das erste Teilgetriebe, wobei die Strömungskupplung das Antriebsmoment des Verbrennungsmotors ohne Momentenüberhöhung überträgt. Während des Anfahrvorgangs, also bei noch offenem Schaltelement, kann bereits eine Lastumschaltung zwischen den beiden Kupplungen erfolgen, um eine möglichst kurze Schaltzeit für einen anschließenden Schaltvorgang zu erreichen. Dies wirkt sich vorteilhaft auf die Performance des Antriebs bei Anfahrvorgängen mit starker Beschleunigung aus.

Im Fahrbetrieb in den Gängen des zweiten Teilgetriebes kann der Anfahrretarder vom Antrieb abgekoppelt werden, indem die zugehörige erste Kupplung und das Schaltelement geöffnet werden, oder indem die erste Kupplung geöffnet wird und das erste Teilgetriebe in Neutral geschaltet wird. Dadurch werden unnötige Schleppverluste des Anfahrretarders vermieden. Die zweite Möglichkeit erlaubt, dass das Schaltelement eingelegt bleiben kann, so dass eine Synchronisierung für ein erneutes Einlegen entfällt.

Weiterhin ermöglicht das zweite Teilgetriebe die Schaltung eines Direktgangs zum Getriebeeingang durch die zweite Kupplung unter Umgehung des Anfahrretarders, da dieser nur am ersten Teilgetriebe wirksam ist. Folglich ist zur Herstellung einer Direktverbindung zwischen Verbrennungsmotor und Getriebe keine Überbrückungskupplung des Anfahrretarders erforderlich, welche einen Blockumlauf des Planetenradsatzes erzeugen würde. Durch Schalten einer Direktverbindung der zweiten Getriebeeingangswelle mit der Getriebeausgangswelle über eine vorzugsweise vorhandene Schaltkupplung am Getriebeeingang des zweiten Teilgetriebes, kann auch ein Direktgang des Gesamtgetriebes dargestellt werden. Der Direktgang wird nicht durch Schleppverluste am Anfahrretarder beeinträchtigt und hat daher einen hohen Wirkungsgrad.

Bei geschlossenem Schaltelement und aktiviertem hydrodynamischen Übertragungselement stellt der Anfahrretarder eine Retarderfunktion zur Verfügung. Die Retarderfunktion kann durch Bremsen der Eingangswelle des ersten Teilgetriebes realisiert werden, wenn im ersten Teilgetriebe ein Gang eingelegt ist. Eine andere Möglichkeit zur Erzeugung einer Bremswirkung besteht darin, beide Kupplungen zu schließen, wenn im zweiten Teilgetriebe ein Gang eingelegt ist und im ersten Teilgetriebe kein Gang eingelegt ist.

Die beiden Teilgetriebe bilden mit dem Anfahrretarder ein Basisgetriebe, dem, im nicht beanspruchten Falle eines Hybridgetriebes, eine Kupplung und eine elektrische Maschine vorgelagert sein können.

Bei einer nicht beanspruchten Ausführungsform kann demnach vorgesehen sein, dass die beiden Teilgetriebe ein Hybridgetriebe bilden, bei dem eine Kupplung und eine elektrische Maschine vorgesehen sind, wobei die elektrische Maschine dem ersten Teilgetriebe zugeordnet ist, dem Anfahrelement vorgelagert ist, und über eine Antriebswelle mit einem Eingangselement des Planetenradsatzes drehfest verbunden ist. Die Kupplung ist dem zweiten Teilgetriebe zugeordnet, dem Anfahrelement antriebstechnisch vorgelagert und weist eingangsseitig eine Kupplungseingangswelle auf, die mit dem Verbrennungsmotor antriebsverbunden ist, und die Kupplung ist ausgangsseitig mit der zweiten Getriebeeingangswelle drehfest verbunden. Weiterhin ist ein Koppelschaltelement vorhanden, über das die beiden Getriebeeingangswellen miteinander koppelbar sind.

Bei einer solchen Anordnung eines Hybridgetriebes mit dem besagten Anfahrretarder und mit einer dem Anfahrretarder vorgelagerter Kupplung sowie mit der vorgelagerten elektrischen Maschine, kann der Anfahrretarder in den Antrieb implementiert sein, indem eines der beiden Planetenradsatzelemente Hohlrad oder Sonnenrad mit dem ersten Funktionsrad des hydrodynamischen Übertragungselements drehfest verbunden ist und über das Schaltelement an einem ortsfesten Bauteil festsetzbar ist, das andere der beiden Planetenradsatzelemente Hohlrad oder Sonnenrad mit einer Antriebswelle der elektrischen Maschine drehfest verbunden ist, und der Planetenträger antriebsseitig mit dem zweiten Funktionsrad drehfest verbunden ist und abtriebsseitig mit der ersten Getriebeeingangswelle drehfest verbunden ist.

Bei dieser Antriebsvorrichtung entfällt im Vergleich zum Doppelkupplungsgetriebe eine erste Kupplung. Stattdessen ist ein Koppelschaltelement zur Kopplung der beiden Getriebeeingangswellen vorhanden, damit der Verbrennungsmotor trotz Wegfalls der ersten Kupplung die Gänge des ersten Teilgetriebes nutzen kann. Die elektrische Maschine dient als Lastschaltelement. Die Anfahrfunktion wird durch den Anfahrretarder realisiert.

Dieser Hybridabtrieb ermöglicht in einem rein elektromotorisch angetriebenen Betrieb, also bei ausgeschaltetem Verbrennungsmotor, ein Anfahren mittels des hydrodynamischen Anfahrretarders. Aus einem Generatorbetrieb heraus ist mit der elektrischen Maschine ein verzögerungsfreies Anfahren möglich. Außerdem ist ein Dauerkriechmodus bei gleichzeitigem Generatorbetrieb darstellbar. Weiterhin ist aus einem rein elektromotorisch angetriebenen Fahrbetrieb ein Start des Verbrennungsmotors bei Erhalt der Zugkraft im Antriebsstrang möglich, wobei Drehmoment- oder Drehzahlschwankungen durch die Strömungskupplung gedämpft werden.

Bei Lastschaltungen in einem verbrennungsmotorisch angetriebenen Fahrbetrieb ist eine Momentenabstützung am Abtrieb mittels der elektrischen Maschine möglich. Ein Verfahren dazu ist an sich in der nicht vorveröffentlichten DE 10 2010 030 569 A1 der Anmelderin beschrieben und kann an die Antriebsvorrichtung gemäß der Erfindung angepasst werden. Grundsätzlich sind mit Hilfe der Strömungskupplung auch Lastschaltungen in einem rein elektromotorisch angetriebenen Fahrbetrieb möglich. Dazu wird auf die nicht vorveröffentlichten Patentanmeldungen DE 10 2010 061 827 A1 sowie DE 10 2011 089 467 A1 hingewiesen. Die dort beschriebenen Verfahren können ebenfalls an einen Antrieb gemäß der Erfindung angepasst werden.

Bei dem beschriebenen Hybridantrieb ist der Elektromotor nicht direkt an den Getriebeeingang gekoppelt. Daher werden mögliche Schwingungen im Antriebsstrang, die durch die Masse des Elektromotors bedingt sind, weitgehend vermieden.

Außerdem kann ein sogenanntes Stillstand-Derating, das bei der Drehzahl Null in einem mit der elektrischen Maschine zusammenwirkenden Wechselrichter zu einer einseitigen Belastung und in der Folge zu einem Abregeln des Antriebsmoments der elektrischen Maschine führen würde, beim Einsatz der elektrischen Maschine in einer Anordnung nach der Erfindung vermieden werden.

Grundsätzlich ist auch eine nicht beanspruchte Ausführungsform gänzlich ohne eingangsseitige Kupplung möglich. Demnach kann vorgesehen sein, dass die beiden Teilgetriebe ein Hybridgetriebe bilden, bei dem eine elektrische Maschine vorgesehen ist, wobei die elektrische Maschine dem ersten Teilgetriebe zugeordnet ist, dem Anfahrelement antriebstechnisch vorgelagert ist sowie über eine Antriebswelle mit einem Eingangselement des Planetenradsatzes drehfest verbunden ist. Die dem zweiten Teilgetriebe zugeordnete zweite Getriebeeingangswelle ist mit dem Verbrennungsmotor antriebsverbunden. Außerdem ist ein Koppelschaltelement vorgesehen, mittels dem die beiden Getriebeeingangswellen miteinander koppelbar sind.

Bei dieser Herstellkosten und Bauraum sparenden Anordnung stehen allerdings nicht alle der zuvor erwähnten Funktionen zur Verfügung. Insbesondere ist ein Start des Verbrennungsmotors mit Erhalt der Zugkraft aus einem rein elektromotorisch angetriebenen Fahrbetrieb hierbei nicht vorgesehen.

Weiterhin kann vorgesehen sein, dass bei einem nicht beanspruchten Hybridgetriebe mit Anfahrretarder und elektrischer Maschine zwischen der elektrischen Maschine und dem Anfahrretarder eine Hydraulikmittelpumpe angeordnet ist, die mit einer Antriebswelle der elektrischen Maschine verbunden ist. Durch dieses Nebenaggregat kann eine konventionell separat angetriebene Hydraulikmittelpumpe entfallen, da alle Anfahrvorgänge, also auch im rein elektromotorisch angetriebenen Fahrbetrieb, über die hydrodynamische Strömungskupplung durchgeführt werden können. Die Pumpe

kann auch im Fahrzeugstillstand betrieben werden und bedarfsweise hydraulisches Druck- und Kühlmittel zur Verfügung stellen.

Gemäß einer weiteren Ausführungsform der Erfindung kann vorgesehen sein, dass das hydrodynamische Übertragungselement ein drittes Funktionsrad aufweist, welches feststehend zwischen dem ersten Funktionsrad und dem zweiten Funktionsrad angeordnet ist, so dass durch das hydrodynamische Übertragungselement ein hydrodynamischer Drehmomentwandler gebildet ist.

Demnach kann anstelle einer einfachen Strömungskupplung ein Drehmomentwandler zum Einsatz kommen, der eine Momentüberhöhung des Antriebsmoments wie bei bekannten hydrodynamischen Drehmomentwandlern bewirkt. Dabei sind das erste sowie das zweite Funktionsrad als Pumpenrad beziehungsweise Turbinenrad und das dritte Funktionsrad als Leitrad wirksam. Bei der Nutzung eines solchen Drehmomentwandlers ist eine Momentanpassung des antreibenden Aggregats, also des Verbrennungsmotors oder gegebenenfalls der elektrischen Maschine, wie sie bei der einfachen Strömungskupplung vorzugsweise vorgesehen ist, bei einem Lastübergang zwischen dem Drehmomentwandler und dem Schaltelement, welches das erste Funktionsrad nach dem Nulldurchgang bei einem Anfahrvorgang festbremst, nicht erforderlich. Die Momentanpassung kann auch im umgekehrten Fall, also beim Lastübergang des geschlossenen Schaltelements in den Retarderbetrieb beim Befüllen des Arbeitsraums, entfallen.

Bei einer zweiten beanspruchten Alternative der Erfindung ist vorgesehen, dass das Anfahrelement als ein doppelflutiger Anfahrretarder ausgebildet ist, mit einem hydrodynamischen Übertragungselement mit zwei ersten, feststehenden Funktionsrädern und einem zweiten, drehbaren Funktionsrad, die zwei Arbeitsräume mit zwei Hydraulikkreisläufen bilden, wobei jeweils ein Hydraulikkreislauf in einer Drehrichtung des drehbaren Funktionsrads wirksam ist. Dieser doppelflutige Anfahrretarder weist weiterhin einen Planetenradsatz auf, mit einem Hohlrad, einem Sonnenrad und einem Planetenträger, der mehrere Planetenräder führt, wobei die Planetenräder mit dem Sonnenrad und dem Hohlrad im Verzahnungseingriff sind, und eine Überbrückungskupplung zur Kopplung zweier Planetenradsatzelemente. Das hydrodynamische Übertragungselement und der Planetenradsatz sind miteinander gekoppelt und bilden gemeinsam eine Baueinheit.

Beispielsweise sind die beiden ersten Funktionsräder zwei axial äußere Statoren, und das zweite Funktionsrad ist ein innerer Rotor. Die zwei Statoren stehen sich axial gegenüber. Der Rotor ist dazwischen drehbar angeordnet und weist beidseitig jeweils eine Beschaufelung auf. Der Rotor bildet mit den beiden Statoren jeweils einen Hydraulikkreislauf. Ein vergleichbarer Anfahrretarder ist an sich aus der eingangs erwähnten DE 198 178 65 A1 bekannt. Es ist möglich, einen derartigen Anfahrretarder an ein Fahrzeuggetriebe mit zwei Teilgetrieben gemäß der Erfindung anzupassen.

Dies kann bei einem Doppelkupplungsgetriebe mit einer diesem doppelflutigen Anfahrretarder vorgelagerten Doppelkupplung dadurch konkretisiert sein, dass eines der beiden Planetenradsatzelemente Hohlrad oder Sonnenrad mit einer Ausgangswelle einer ersten Kupplung drehfest verbunden ist, das andere der beiden Planetenradsatzelemente Hohlrad oder Sonnenrad mit dem zweiten Funktionsrad drehfest verbunden ist, der Planetenträger abtriebsseitig mit der ersten Getriebeeingangswelle drehfest verbunden ist, und das mit dem zweiten Funktionsrad drehfest verbundene der beiden Planetenradsatzelemente Hohlrad oder Sonnenrad über eine Überbrückungskupplung mit dem Planetenträger drehfest verbindbar ist, so dass bei geöffneter Überbrückungskupplung eine hydrodynamische Anfahrfunktion und bei geschlossener Überbrückungskupplung eine hydrodynamische Retarderfunktion eingestellt ist.

Bei diesem doppelflutigen Anfahrretarder wird das mit dem zweiten Funktionsrad verbundene Planetenradsatzelement, also beispielsweise das Sonnenrad, bei einem Anfahrvorgang abgebremst und gleichzeitig ein Getriebeeingangsmoment aufgebaut. Dieser Vorgang ist mit einer Momentüberhöhung verbunden. Durch Schalten der vorzugsweise reibschlüssigen Überbrückungskupplung ist das Sonnenrad mit dem Planetenträger und damit mit dem drehenden Funktionsrad, also mit dem Rotor des Anfahrretarders koppelbar. Dadurch kann ein Retarderbetrieb dargestellt werden. Da sich die Drehrichtung zwischen Rotor und Stator dabei umkehrt, soll die Strömung sinnvollerweise vom ersten Hydraulikkreis in den zweiten Hydraulikkreis umgeschaltet werden. Dadurch ist beim Anfahren und beim Bremsen jeweils eine entsprechend ausgerichtete Beschaufelung der Funktionsräder wirksam, und daher ein hydrodynamisches Antriebsmoment bzw. ein hydrodynamisches Bremsmoment in vergleichbarer Höhe erreichbar.

Die Anordnung ermöglicht zudem Lastschaltungen zwischen den beiden Kupplungen des Doppelkupplungsgetriebes, ohne dass der Anfahrvorgang durch Schließen der Überbrückungskupplung abgeschlossen sein muss. Vielmehr kann der Anfahrvorgang über die Lastschaltung abgeschlossen werden. Dies erlaubt eine kleinere und damit kostengünstigere Auslegung der Überbrückungskupplung.

Der Einsatz eines derartigen doppelflutigen Anfahrretarders ist auch bei einem nicht beanspruchten Hybridgetriebe mit nur einer Kupplung und einer elektrischen Maschine möglich, wobei die Kupplung und die elektrische Maschine dem Anfahrretarder antriebstechnisch vorgelagert sein können. Dazu kann vorgesehen sein, dass eines der beiden Planetenradsatzelemente Hohlrad oder Sonnenrad mit einer Antriebswelle einer elektrischen Maschine drehfest verbunden ist, das andere der beiden Planetenradsatzelemente Hohlrad oder Sonnenrad mit dem zweiten Funktionsrad drehfest verbunden ist, der Planetenträger abtriebsseitig mit der ersten Getriebeeingangswelle drehfest verbunden ist, und das mit dem zweiten Funktionsrad drehfest verbundene der beiden Planetenradsatzelemente Hohlrad oder Sonnenrad über eine Überbrückungskupplung mit dem Planetenträger drehfest verbindbar ist.

Diese Anordnung ermöglicht, ähnlich wie bei der Ausführungsform der Antriebsvorrichtung mit einem einflutigem Anfahrretarder, ein hydrodynamisches Anfahren in einem rein elektromotorisch angetriebenen Fahrbetrieb über die Strömungskupplung. Grundsätzlich ist auch ein Anfahrvorgang bei geschlossener Überbrückungskupplung, also ein mechanisches Anfahren möglich. Eine Schwingungsentkopplung der elektrischen Maschine ist ebenfalls gegeben. Das besagte Stillstand-Derating im Wechselrichter kann ebenfalls vermieden werden.

Möglich, aber nicht beansprucht ist auch eine Hybridanordnung mit dem einen doppelflutigen Anfahrretarder unter Wegfall der eingangsseitigen Kupplung, da die beiden Getriebeeingangswellen über ein Koppelschaltelement ohnehin entkoppelbar bzw. miteinander koppelbar sind. Die Triebwelle des Verbrennungsmotors kann dann mit der Eingangswelle des zweiten Teilgetriebes drehfest verbunden sein.

Auch diese Anordnung ermöglicht ein verzögerungsfreies Anfahren aus einem Generatorbetrieb heraus, sowie ein Dauerkriechen mit gleichzeitigem Generatorbetrieb. Außerdem ist ein Start des Verbrennungsmotors unter Erhalt der Zugkraft mit einer Schlupfentkopplung zum Getriebe durchführbar. Ein entsprechendes Verfahren dazu ist an sich in der bereits erwähnten, nicht vorveröffentlichten DE 10 2011 089 467 A1 bekannt.

Ein Verfahren zur Durchführung einer Lastschaltung bei verbrennungsmotorischem Antrieb mittels Unterstützung der elektrischen Maschine kann bei dieser Getriebeanordnung wiederum aus einem Verfahren abgeleitet werden, dass in der nicht vorveröffentlichten DE 10 2010 030 569 A1 der Anmelderin beschrieben ist.

Lastschaltungen in einem rein elektromotorisch angetriebenen Fahrbetrieb sind mit Hilfe der Überbrückungskupplung bei deaktivierter Retarderfunktion möglich. Dazu sei wiederum auf die Patentanmeldung DE 10 2011 089 467 A1 der Anmelderin verwiesen.

Bei den bisher erwähnten Ausführungsbeispielen ist eine Doppelkupplung dem Anfahrretarder antriebstechnisch vorgelagert. Der Anfahrretarder bildet dabei mit dem aus zwei Teilgetrieben bestehenden Fahrzeuggetriebe funktional ein Basisgetriebe, dem entweder ein Doppelkupplungsmodul oder ein Hybridmodul antriebstechnisch vorgeschaltet ist. Bei deaktiviertem hydrodynamischem Übertragungselement stellt der Planetenradsatz des Anfahrretarders eine Eingangsübersetzung des betreffenden ersten Teilgetriebes dar.

Es ist jedoch auch eine Anordnung möglich, bei der zwei Einzelkupplungen zwischen dem Anfahrretarder und dem Getriebe angeordnet sind, welche die Funktion einer Doppelkupplung erfüllen.

Es kann somit auch vorgesehen sein, dass die beiden Teilgetriebe ein Doppelkupplungsgetriebe bilden, bei dem zwei Kupplungen vorgesehen sind, wobei jeweils eine Kupplung einem Teilgetriebe zugeordnet ist, wobei die beiden Kupplungen als Einzelkupplungen ausgebildet sind, dem Anfahrelement antriebstechnisch nachgelagert sind und eingangsseitig jeweils eine separate Kupplungseingangswelle aufweisen, wobei eine erste Kupplung dem ersten Teilgetriebe zugeordnet ist und eingangsseitig über ihre Kupplungseingangswelle mit einem Element des Planetenradsatzes drehfest verbunden ist und ausgangsseitig mit der ersten Getriebeeingangswelle drehfest verbunden ist, und wobei eine zweite Kupplung dem zweiten Teilgetriebe zugeordnet ist und eingangsseitig über ihre Kupplungseingangswelle mit dem Verbrennungsmotor antriebsverbunden ist und ausgangsseitig mit der zweiten Getriebeeingangswelle drehfest verbunden ist.

Für das Zusammenwirken der beiden Einzelkupplungen mit dem einflutigen Anfahrretarder kann vorgesehen sein, dass eines der beiden Planetenradsatzelemente Hohlrad oder Sonnenrad mit dem ersten Funktionsrad des hydrodynamischen Übertragungselements drehfest verbunden ist und über das Schaltelement an einem ortsfesten Bauteil festsetzbar ist, das andere der beiden Planetenradsatzelemente Hohlrad oder Sonnenrad mit dem Verbrennungsmotor antriebsverbunden ist und mit einer Kupplungseingangswelle einer zweiten Kupplung drehfest verbunden ist, und der Planetenträger antriebsseitig mit dem zweiten Funktionsrad drehfest verbunden ist und abtriebsseitig mit einer Kupplungseingangswelle einer ersten Kupplung drehfest verbunden ist.

Bei dieser Anordnung ist wiederum bei geöffnetem Schaltelement eine hydrodynamische Anfahrfunktion und bei geschlossenem Schaltelement eine hydrodynamische Retarderfunktion eingeschaltet.

Die beiden Teilgetriebe selbst können bei allen erwähnten Ausführungsformen als ein Vorgelegegetriebe ausgebildet sein, wobei die beiden Getriebeeingangswellen koaxial zueinander angeordnet sind, wobei eine gemeinsame Getriebeausgangswelle koaxial hinter den Getriebeeingangswellen angeordnet ist, wobei die dem ersten Teilgetriebe zugeordnete erste Getriebeeingangswelle als eine äußere Hohlwelle ausgebildet ist, in der die dem zweiten Teilgetriebe zugeordnete zweite Getriebeeingangswelle angeordnet ist und aus dieser getriebeseitig heraustritt, wobei den Teilgetrieben jeweils eine von zwei koaxial übereinander angeordneten Vorgelegewellen zugeordnet ist, die mit der jeweiligen Getriebeeingangswelle über jeweils eine Radebene mit zwei im Verzahnungseingriff stehenden Zahnrädern triebverbunden ist, wobei die Teilgetriebe weitere Radebenen umfassen, in denen jeweils im Verzahnungseingriff stehende Zahnräder angeordnet sind, die als Losräder oder Festräder ausgebildet sind und mit jeweils einer der Wellen drehfest verbunden oder über Schaltvorrichtungen mit jeweils einer der Wellen drehfest verbindbar sind, so dass dem ersten Teilgetriebe eine Ganggruppe mit ungeraden Gängen mit zumindest einem Anfahrgang sowie zumindest einem Rückwärtsgang zugeordnet ist, und dem zweiten Teilgetriebe zumindest eine Ganggruppe mit geraden Gängen zugeordnet ist.

Diese Getriebestruktur ist für ein Zusammenwirken mit einem hydrodynamischen Anfahrelement, welches an einem der beiden Teilgetriebe wirksam ist, besonders gut geeignet. Es sind jedoch auch andere Getriebestrukturen mit zwei Teilgetrieben möglich. Wesentlich für den Radsatz ist, dass ein Anfahrgang in demjenigen Teilgetriebe angeordnet ist, dem das hydrodynamische Anfahrelement zugeordnet ist. Vorzugsweise ist ein Rückwärtsgang ebenfalls in diesem Teilgetriebe angeordnet, um sowohl vorwärts als auch rückwärts häufige Anfahrvorgänge hydrodynamisch und damit verschleißfrei durchführen zu können.

Zur Verdeutlichung der Erfindung ist der Beschreibung eine Zeichnung mit mehreren Ausführungsbeispielen beigefügt. In dieser zeigt
Fig. 1 eine Antriebsvorrichtung eines Fahrzeugs mit einem Doppelkupplungsgetriebe und einem Anfahrretarder mit einer Strömungskupplung, sowie mit einer dem Anfahrretarder antriebstechnisch vorgelagerten Doppelkupplung,
Fig. 2 eine Antriebsvorrichtung eines nicht beanspruchten Fahrzeugs mit einem Hybridgetriebe und einem Anfahrretarder gemäß Fig. 1, sowie mit einer dem Anfahrretarder antriebstechnisch vorgelagerten Kupplung, sowie mit einer dem Anfahrretarder antriebstechnisch vorgelagerten elektrischen Maschine,
Fig. 3 eine Antriebsvorrichtung gemäß Fig. 1, jedoch mit einem Anfahrretarder mit einem Drehmomentwandler,
Fig. 4 eine Antriebsvorrichtung eines nicht beanspruchten Fahrzeugs mit einem Hybridgetriebe gemäß Fig. 2, jedoch mit einem Anfahrretarder gemäß Fig. 3,
Fig. 5 eine Antriebsvorrichtung eines Fahrzeugs mit einem Doppelkupplungsgetriebe gemäß Fig. 1, jedoch mit einem Anfahrretarder mit einer doppelflutigen Strömungskupplung,
Fig. 6 eine Antriebsvorrichtung eines nicht beanspruchten Fahrzeugs mit einem Hybridgetriebe gemäß Fig. 2, jedoch mit einem Anfahrretarder gemäß Fig. 5
Fig. 7 eine Antriebsvorrichtung eines nicht beanspruchten Fahrzeugs mit einem Hybridgetriebe gemäß Fig. 2, zusätzlich mit einer Hydraulikmittelpumpe, und
Fig. 8 eine Antriebsvorrichtung eines Fahrzeugs mit einem Doppelkupplungsgetriebe gemäß Fig. 1, jedoch mit zwei dem Anfahrretarder antriebstechnisch nachgelagerten einzelnen Kupplungen.

Zur Vereinfachung sind in den Figuren gleiche bzw. funktionsgleiche Bauteile mit gleichen Bezugszeichen versehen.

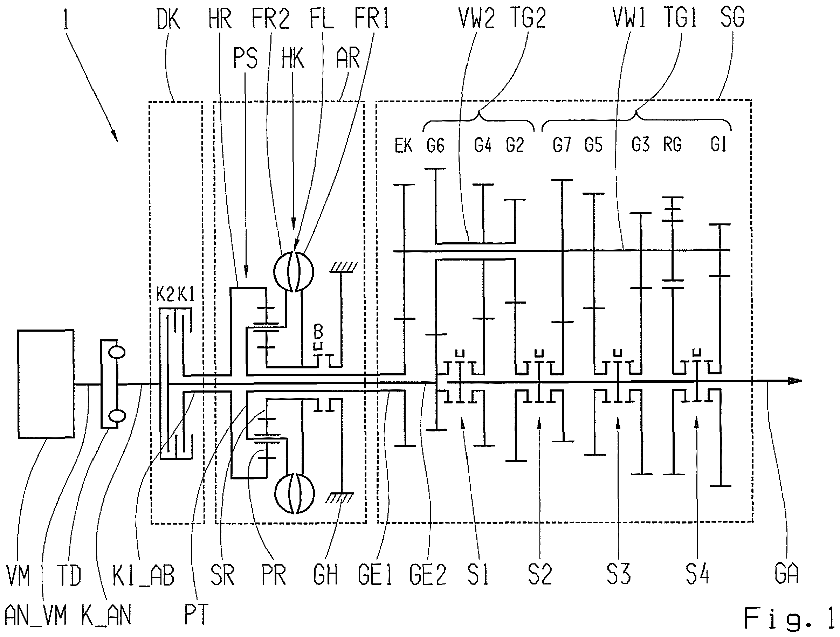

Fig. 1 zeigt demnach eine Antriebsvorrichtung eines Fahrzeugs mit einem Doppelkupplungsgetriebe 1, welche ein mehrstufiges automatisiertes Schaltgetriebe SG mit zwei Teilgetrieben TG1, TG2, einen Anfahrretarder AR, eine Doppelkupplung DK mit zwei Reibungskupplungen K1, K2, einen Schwingungsdämpfer TD und einen Verbrennungsmotor VM aufweist.

Das Schaltgetriebe SG ist in Vorgelegebauweise ausgebildet und umfasst insgesamt sieben Vorwärtsgänge G1, G2, G3, G4, G5, G6, G7 sowie einen Rückwärtsgang RG, die über vier doppelseitige Schaltpakete S1, S2, S3, S4 schaltbar sind. Da der Aufbau eines Vorgelegegetriebes an sich bekannt und die Arbeitsweise der einzelnen als Losräder und Festräder ausgebildeten Zahnräder eines solchen Getriebes für die Erfindung unerheblich ist, wird zur Vereinfachung auf eine explizite Bezeichnung der einzelnen Zahnräder verzichtet.

Das erste Teilgetriebe TG1 stellt eine Ganggruppe mit den ungeraden Gängen G1, G3, G5 G7 sowie dem Rückwärtsgang RG bereit. Das zweite Teilgetriebe TG2 stellt eine Ganggruppe mit den geraden Gängen G2, G4, G6 bereit. Mit der Doppelkupplung DK ist grundsätzlich eine zugkraftunterbrechungsfreie sequenzielle Schaltabfolge durchführbar, wobei in einem der beiden Teilgetriebe TG1, TG2 ein Gang aktiv ist und in dem jeweils anderen Teilgetriebe TG1, TG2 ein Folgegang vorgewählt ist. Der Gangwechsel erfolgt in bekannter Weise durch überschneidendes Öffnen und Schließen der beiden Kupplungen K1, K2.

Die beiden Teilgetriebe TG1, TG2 weisen jeweils eine separate Getriebeeingangswelle GE 1, GE2 und eine gemeinsame Getriebeausgangswelle GA auf. Die beiden Getriebeeingangswellen GE1, GE2 sind koaxial zueinander angeordnet, wobei eine erste Getriebeeingangswelle GE1, die dem ersten Teilgetriebe TG1 zugeordnet ist, als eine äußere Hohlwelle ausgebildet ist, in der die zweite Getriebeeingangswelle GE2, welche dem zweiten Teilgetriebe TG2 zugeordnet ist, als innere Welle angeordnet ist, und aus dieser getriebeseitig heraustritt.

Die Vorwärtsgänge G1, G2, G3, G4, G5, G6, G7 sind jeweils in einer Radebene mit zwei im Verzahnungseingriff stehenden Zahnrädern angeordnet. Der Rückwärtsgang RG weist zudem ein Drehrichtungsumkehrrad auf. Die als Losräder ausgebildeten Zahnräder sind auf der Getriebeausgangswelle GA angeordnet und über die jeweilige Schaltvorrichtung S1, S2, S3, S4 mit dieser drehfest verbindbar. Die als Festräder ausgebildeten Zahnräder der beiden Teilgetriebe TG1, TG2 befinden sich auf jeweils einer Vorgelegewelle VW1, VW2. Die beiden Vorgelegewellen VW1, VW2 sind koaxial zueinander angeordnet, wobei die kurze zweite Vorgelegewelle VW2 dem zweiten Teilgetriebe TG2 zugeordnet ist und als Hohlwelle über der inneren ersten Vorgelegewelle VW1 angeordnet ist, welche dem ersten Teilgetriebe TG1 zugeordnet ist, und beidseitig aus der Hohlwelle heraustritt.

Die Getriebeeingangswelle GE1 des ersten Teilgetriebes TG1 ist über eine Eingangskonstante EK mit zwei im Verzahnungseingriff stehenden Zahnrädern mit der zugehörigen ersten Vorgelegewelle VW1 triebverbunden. Die Getriebeeingangswelle GE 2 des zweiten Teilgetriebes ist über die erste Radebene des zweiten Teilgetriebes TG2 mit der zugehörigen zweiten Vorgelegewelle VW2 triebverbunden. Durch ein erstes Schaltelement S1 ist die Getriebeeingangswelle GE 2 des zweiten Teilgetriebes TG2 direkt mit der Getriebeausgangswelle GA verbindbar. Demzufolge ist der sechste Gang, welcher, wie in Fig. 1 ersichtlich, der ersten Radebene des zweiten Teilgetriebes TG2 zugeordnet ist, als ein Direktgang ausgelegt. Das zweite Teilgetriebe TG2 ermöglicht somit einen Direktgang unter Umgehung des Anfahrretarders AR, also ohne Momentverluste durch Zahneingriffe des Planetenradsatzes PS und ohne Schleppmomentverluste durch die Strömungskupplung HK.

Die beiden Kupplungen K1, K2 sind in einer Doppelkupplung DK zusammengefasst. Die Kupplungseingangsseiten sind über einen gemeinsamen Kupplungskorb und über eine gemeinsame Kupplungseingangswelle K_AN mit einer Triebwelle AN_VM eines Verbrennungsmotors VM antriebsverbunden. Zur Schwingungsdämpfung ist zwischen der Doppelkupplung DK und dem Verbrennungsmotor VM ein Schwingungsdämpfer TD angeordnet. Die erste Kupplung K1, welche dem ersten Teilgetriebe TG1 zugeordnet ist, ist ausgangsseitig über eine Ausgangswelle K1_AB mit einem Eingangselement HR des im Folgenden beschriebenen Anfahrretarders AR drehfest verbunden. Die zweite Kupplung K2, welche dem zweiten Teilgetriebe TG2 zugeordnet ist, ist ausgangsseitig direkt mit der zweiten Getriebeeingangswelle GE2 drehfest verbunden.

Der Anfahrretarder AR ist zwischen der Doppelkupplung DK und dem Schaltgetriebe SG angeordnet und umfasst ein hydrodynamisches Übertragungselement HK sowie einen Planetenradsatz PS. Der Planetenradsatz PS weist ein äußeres Hohlrad HR als Eingangselement, ein zentrales Sonnenrad SR und einen Planetenträger PT auf, wobei der Planetenträger PT mehrere mit dem Hohlrad HR und dem Sonnenrad SR im Verzahnungseingriff stehende Planetenräder PR führt.

Das hydrodynamische Übertragungselement HK umfasst ein erstes Funktionsrad FR1 und ein zweites Funktionsrad FR2. Die beiden Funktionsräder FR1, FR2 sind als Schaufelräder ausgebildet, die sich gegenüberstehen und drehbar angeordnet sind. Sie bilden einen nicht explizit dargestellten, üblicherweise torusförmigen Arbeitsraum FL, der über einen nicht dargestellten Hydraulikkreis mit einem Fluid, beispielsweise Öl, befüllbar ist. Die Beaufschlagung und Entlastung des Arbeitsraums FL mit dem Fluid ist über den Hydraulikkreis regelbar. Zwischen dem ersten Funktionsrad FR1 und einen drehfest angeordneten Bauteil GH, beispielsweise einem Gehäuse, ist ein Schaltelement B angeordnet. Das Schaltelement B ist in Fig. 1 als eine formschlüssige Klaue ausgebildet, sie kann aber auch als eine reibschlüssige Bremse ausgebildet sein und wird daher im Folgenden auch als Bremse bezeichnet.

Der Planetenradsatz PS und das hydrodynamisches Übertragungselement HK sind miteinander gekoppelt. Das Hohlrad HR des Planetenradsatzes PS ist mit der ersten Kupplung K1 drehfest verbunden. Das Sonnenrad SR ist mit dem ersten Funktionsrad FR1 verbunden und gemeinsam mit dem Funktionsrad FR1 durch das Schaltelement B an dem Gehäuse GH festbremsbar bzw. feststellbar. Der Planetenträger PT ist mit der ersten Getriebeeingangswelle GE1 und damit mit dem ersten Teilgetriebe TG1 des Fahrzeuggetriebes SG sowie mit dem zweiten Funktionsrad FR2 verbunden. Das hydrodynamische Übertragungselement HK ist somit zwischen dem Sonnenrad SR und dem Planetenträger PT geschaltet.

Das Doppelkupplungsgetriebe 1 mit dem Anfahrretarder AR weist folgende Eigenschaften auf:
Bei geöffneter Bremse B stellt der Anfahrretarder AR eine Strömungskupplung ohne Momentüberhöhung dar. Für einen hydrodynamischen Anfahrvorgang ist im ersten Teilgetriebe TG1 ein Anfahrgang, beispielsweise der erste Gang G1, eingelegt und die zugehörige erste Kupplung K1 der Doppelkupplung DK geschlossen. Die Kupplung K1 wird daher vorteilhaft nicht im Schlupf beansprucht. Stattdessen befindet sich der Anfahrretarder AR bzw. das hydrodynamische Übertragungselement HK beim Befüllen des Arbeitsraums FL im Schlupf und überträgt das Antriebsmoment des Verbrennungsmotor VM. Das Sonnenrad SR dreht dabei rückwärts, weil der Planetenträger PT mit der Getriebeeingangswelle GE1 anfangs stillsteht.

Mit zunehmender Drehzahl der Getriebeeingangswelle GE1 und damit zunehmender Fahrgeschwindigkeit sinkt die Drehzahl des Sonnenrads SR in Richtung Null. Bei Erreichen des Nulldurchgangs wird das Schaltelement bzw. die Bremse B lastfrei eingelegt. Anschließend wird die Übertragungsfähigkeit der Strömungskupplung HK durch Entleeren oder Teilentleeren des Arbeitsraums FL abgesenkt. Die Bremse B stützt somit nun das übertragene Drehmoment ab. Folglich wird das Moment des Verbrennungsmotors VM überhöht. Gleichzeitig mit dem Abbau des hydrodynamischen Übertragungsmoments wird das Drehmoment des Verbrennungsmotors VM abgesenkt, um das Getriebeeingangsmoment am ersten Teilgetriebe TG1 konstant zu halten.

Zwischen den beiden Eingangskupplungen K1, K2 kann eine Lastschaltung erfolgen, also ein Wechsel vom ersten Gang G1 in den zweiten Gang G2, ohne den Anfahrvorgang durch Schließen der Bremse B abzuschließen. Dadurch ergibt sich eine Zeitersparnis beim Hochbeschleunigen des Fahrzeugs, gegebenenfalls mit Komforteinbußen.

Während ein Gang des zweiten Teilgetriebes TG2 aktiv ist, kann die offene Bremse B wie folgt synchronisiert werden. Anfangs ist die zweite Kupplung K2 geschlossen und ein Gang im zweiten Teilgetriebe TG2 eingelegt. Das erste Teilgetriebe TG1 ist in Neutral geschaltet, die erste Kupplung K1 ist geöffnet und die Strömungskupplung HK entleert, also bis auf ein geringes Schleppmoment, welches das Sonnenrad SR gegebenenfalls leicht zum Drehen bringt, momentfrei. Anschließend wird ein Gang im ersten Teilgetriebe TG1 eingelegt. Der Gang muss eine geeignet lange Übersetzung aufweisen, damit der Planetenträger PT ausreichend langsamer dreht als die Triebwelle AW des Verbrennungsmotors VM. Dies ist notwendig, damit das Sonnenrad SR in der Folge die Drehzahl Null erreichen kann. Dann wird die erste Kupplung K1 etwas in Schließrichtung betätigt, um ein geringes Drehmoment zu übertragen, welches ausreicht, um das Hohlrad HR zu beschleunigen. In der Folge verlangsamt sich das Sonnenrad SR und erreicht die Drehzahl Null oder eine Drehzahl annähernd Null, bei der die Bremse B eingelegt wird. Abschließend wird die erste Kupplung K1 wieder geöffnet, um die Synchronisation des Bremselements B abzuschließen.

Das zweite Teilgetriebe TG2 ermöglicht einen Fahrbetrieb mit abgekoppeltem Anfahrretarder AR, um Schleppverluste zu vermeiden. Dazu kann die erste Kupplung K1 und die Bremse B geöffnet werden, das Sonnenrad SR dreht dann frei mit, die Strömungskupplung HK erzeugt folglich keine Schleppverluste. Eine völlige Abkopplung des Anfahrretarders AR ist möglich, indem das erste Teilgetriebe TG1 in Neutral geschaltet und die erste Kupplung K1 geöffnet wird. Das Schaltelement der Bremse B kann dann eingelegt bleiben, so dass dessen erneute Synchronisation entfällt.

Bei geschlossener Bremse B stellt der Anfahrretarder AR einen Retarder, also eine Dauerbremse dar. Ein Bremsvorgang kann durchgeführt werden, indem die Eingangswelle GE1 des ersten Teilgetriebes TG1 bei gefüllter Strömungskupplung HK abgebremst wird, wobei im dem Teilgetriebe TG1 ein Gang eingelegt ist. Wenn im ersten Teilgetriebe TG1 kein Gang eingelegt ist und im zweiten Teilgetriebe TG2 ein Gang eingelegt ist, kann über die geschlossene Doppelkupplung DK, also erste Kupplung K1 geschlossen und zweite Kupplung K2 geschlossen, ein Bremsbetrieb durchgeführt werden.

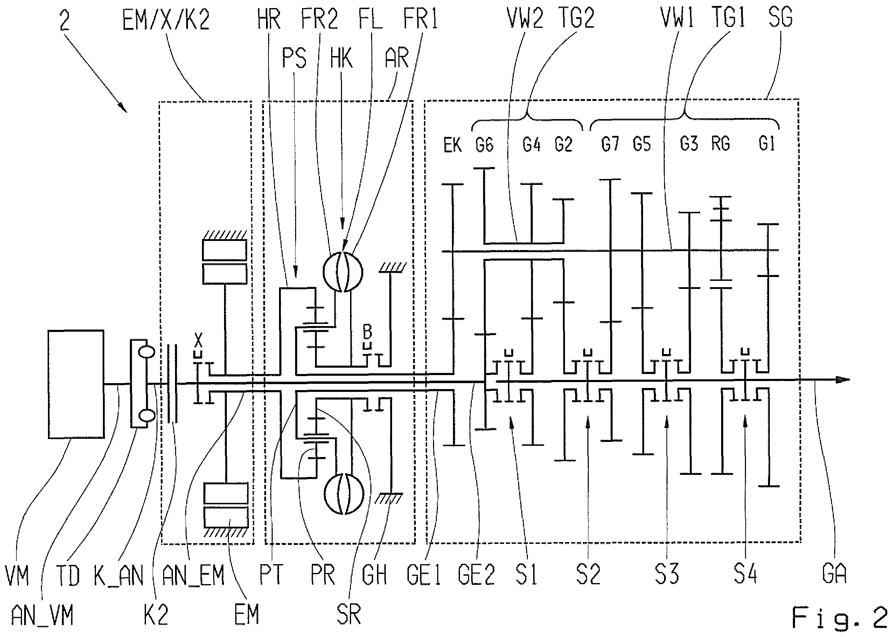

Fig. 2 zeigt eine Antriebsvorrichtung eines nicht beanspruchten Fahrzeugs mit einem Hybridgetriebe 2 mit der Fähigkeit zur elektrischen Zugkraftunterstützung und dem Anfahrretarder AR. Anstelle des Doppelkupplungsmoduls DK ist ein Hybridmodul EX/X/K2 vorgesehen. Das Hybridmodul EX/X/K2 umfasst eine elektrische Maschine EM, eine Kupplung K2 und ein Koppelschaltelement X. Eine Antriebswelle AN_EM der elektrischen Maschine EM, welche mit dem Rotor der elektrischen Maschine EM verbunden ist, ist mit dem Eingangselement, also dem Hohlrad HR des Planetenradsatzes PS drehfest verbunden. Zwischen der elektrischen Maschine EM und dem Verbrennungsmotor VM ist die Kupplung K2 angeordnet. Über die Kupplung K2 ist eine reibschlüssige Verbindung zwischen der Triebwelle AN_VM des Verbrennungsmotors VM und der zweiten Getriebeeingangswelle GE2, welche dem zweiten Teilgetriebe TG2 zugeordnet ist, herstellbar. Das Koppelschaltelement X ist zwischen der Kupplung K2 und der elektrischen Maschine EM angeordnet. Das Koppelschaltelement X ermöglicht eine schaltbare direkte Verbindung der beiden Getriebeeingangswellen GE1, GE2 miteinander. Hinsichtlich des Anfahrretarders AR und des Schaltgetriebes SG mit den beiden Teilgetrieben TG1, TG2 ist der Hybridantrieb baugleich mit dem Antrieb von Fig. 1.

Das Hybridgetriebe 2 mit dem Anfahrretarder AR weist folgende Eigenschaften auf:
Ein hydrodynamischer Anfahrvorgang kann bei ausgeschaltetem Verbrennungsmotor VM über den Anfahrretarder AR in einem elektromotorisch angetriebenen Fahrbetrieb über die elektrische Maschine EM erfolgen. Ist das Schaltelement der Bremse B eingelegt, kann ein elektromotorisch angetriebener Anfahrvorgang vom Beginn an mechanisch erfolgen, indem der Planetenradsatz PS als eine konstante Anfahrübersetzung wirkt. Durch das offene Koppelschaltelement X ist die Kupplung K2 entkoppelt und verursacht keine Schleppverluste.

Außerdem kann aus einem Generatorbetrieb der elektrischen Maschine EM heraus verzögerungsfrei angefahren werden. Für eine solche Anfahrbereitschaft werden die Kupplung K2 und das Koppelschaltelement X geschlossen, das zweite Teilgetriebe TG2 in Neutral geschaltet und ein Anfahrgang im ersten Teilgetriebe TG1 eingelegt. Das Bremselement B ist offen. Die elektrische Maschine EM dreht mit der Drehzahl des Verbrennungsmotors VM und arbeitet als Generator. Zum Anfahren wird an der Strömungskupplung HK ein hydrodynamisches Moment durch Befüllen des Arbeitsraums FL erzeugt. Bei dem Generatorbetrieb ist ein Dauerkriechen des Fahrzeugs möglich. Das zuvor beschriebene Anfahren wird dazu bei geringer Fahrgeschwindigkeit beliebig lange fortgesetzt.

Der Start des ausgeschalteten Verbrennungsmotors VM kann mit Erhalt der Zugkraft im Antriebsstrang und mit einer Schlupfentkopplung erfolgen. Dafür befindet sich das Fahrzeug zunächst in einem rein elektromotorisch angetriebenen Fahrbetrieb. Die Bremse B ist eingelegt, im ersten Teilgetriebe TG1 ist ein Gang eingelegt, die Kupplung K2 ist offen. Das Koppelschaltelement X wird eingelegt. Es folgt ein Lastaufbau an der Strömungskupplung HK wie bereits beschrieben, so dass die Bremse B lastfrei wird und ausgelegt werden kann. Da das Abtriebsmoment wegen des Abbaus der Momentüberhöhung durch den Planetenradsatz PS dabei sinkt, kann zum Ausgleich, soweit verfügbar, das Antriebsmoment der elektrischen Maschine EM entsprechend erhöht werden. Es folgt der Start des Verbrennungsmotors VM über die Kupplung K2. Die Strömungskupplung HK dämpft etwaige Schwankungen bei der Übertragung des Startmoments. Anschließend kann eine Synchronisation der Bremse B unter Last durch eine geeignete Regelung der Drehmomente des Verbrennungsmotors VM, der elektrischen Maschine EM und gegebenenfalls der Strömungskupplung HK erfolgen. Schließlich erfolgt ein Lastabbau an der Strömungskupplung HK, wobei gleichzeitig die Momente des Verbrennungsmotors VM und der elektrischen Maschine EM angepasst werden, um einen gewünschten Momentverlauf am Abtrieb zu erreichen.

Die elektrische Maschine EM kann Lastschaltungen unterstützen. Dazu stützt die elektrische Maschine EM über das erste Teilgetriebe TG1 das Abtriebsmoment, während ein verbrennungsmotorisch angetriebener Gangwechsel stattfindet. Der Gangwechsel kann im zweiten Teilgetriebe TG2 erfolgen. Alternativ dazu kann der Verbrennungsmotor über das Koppelschaltelement X an das erste Teilgetriebe TG1 gekoppelt werden und dort der Gangwechsel erfolgen. Die notwendige Synchronisation dieser Schaltungen kann, soweit vorhanden, über Synchronisierungen am Koppelschaltelement X und/oder an den Schaltpaketen S1, S2 des zweiten Teilgetriebes TG2 erfolgen. Wenn dabei ein elektromotorisch angetriebener Gangwechsel im ersten Teilgetriebe TG1 stattfindet, werden die jeweils betroffenen Schaltelemente S2, S3, S4 des ersten Teilgetriebes TG1 mittels der elektrischen Maschine EM synchronisiert. Ergänzend sei dazu noch auf die bereits erwähnte DE 10 2010 030 569 A1 der Anmelderin verwiesen.

Ich einem rein elektromotorisch angetriebenen Fahrbetrieb können Lastschaltungen mit Hilfe der Strömungskupplung HK erfolgen. Im Falle einer Zughochschaltung bei einem Fahrbetrieb über das zweite Teilgetriebe TG2, dargestellt durch Schließen des Koppelschaltelements X bei offener Kupplung K2 und offener Bremse B, kann im ersten TeilgetriebeTG1 ein Folgegang eingelegt werden. Anschließend übernimmt die Strömungskupplung HK die Last, so dass das zweite Teilgetriebe TG2 lastfrei wird und der Gang des zweiten Teilgetriebes TG2 ausgelegt werden kann. Anschließend kann die Bremse B synchronisiert und eingelegt werden. Während der Zughochschaltung ist es grundsätzlich möglich, den Verbrennungsmotor VM unter Ausnutzung der frei werdenden Schwungenergie der elektrischen Maschine EM zu starten. Eine Zugrückschaltung ist ebenfalls möglich. Ergänzend sei dazu wiederum auf die bereits erwähnte DE 10 2010 030 569 A1 der Anmelderin sowie die ebenfalls bereits erwähnten DE 10 2010 061 827 A1 verwiesen.

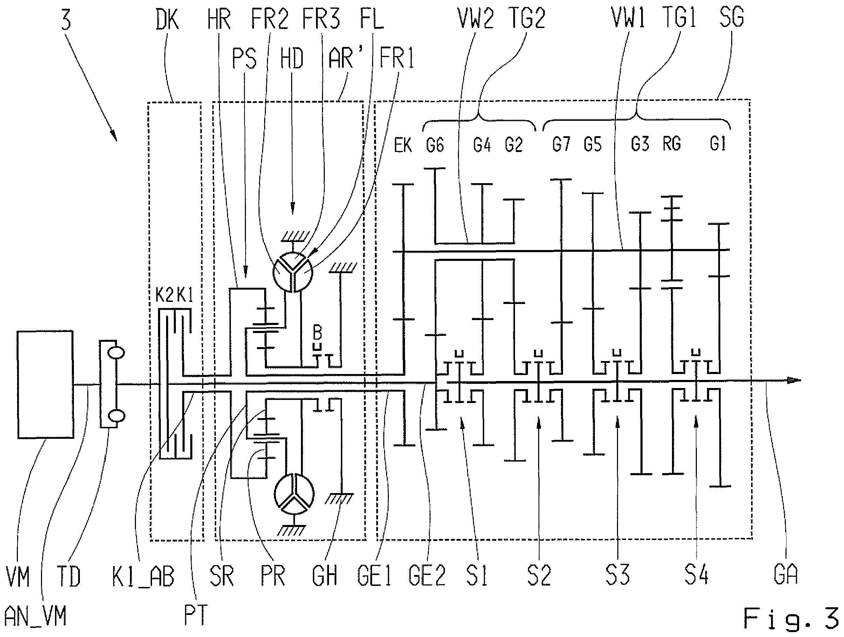

Fig. 3 zeigt ein mit dem Doppelkupplungsgetriebe 1 von Fig. 1 vergleichbares Doppelkupplungsgetriebe 3 mit einem Anfahrretarder AR'. Anstelle der Strömungskupplung HK ist hier ein hydrodynamischer Drehmomentwandler HD vorgesehen. Dieser weist zusätzlich ein drittes, feststehendes Funktionsrad FR3 auf, welches als Leitrad eine hydrodynamische Momentüberhöhung des Antriebsmoments bewirkt.

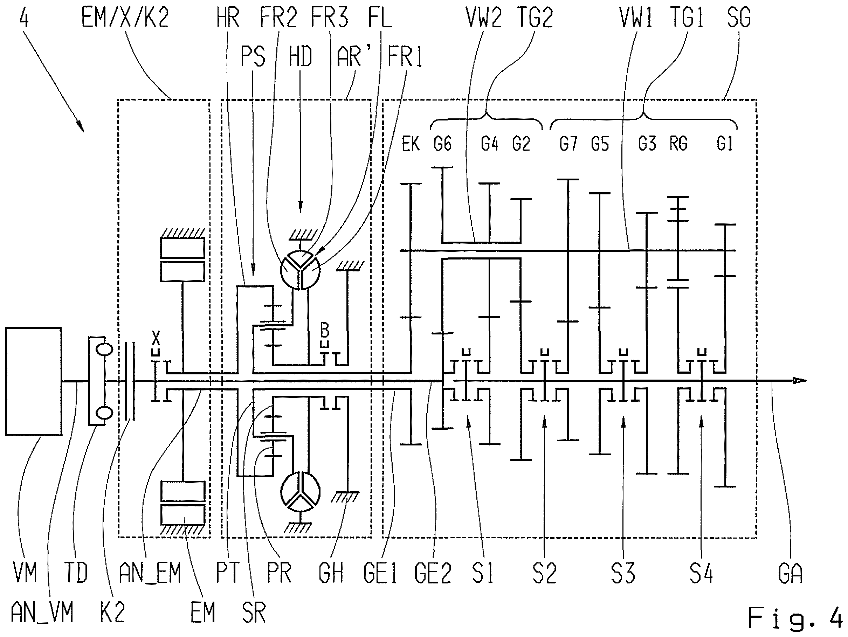

Fig. 4 zeigt einen nicht beanspruchten Hybridantrieb 4 mit einem solchen Drehmomentwandler HD. Die Funktionsweise ist analog zu den bei Fig.1 bzw. Fig. 2 beschriebenen Funktionen. Allerdings ist eine Momentanpassung des Verbrennungsmotors VM bzw. der elektrischen Maschine EM bei einem Lastübergang vom hydrodynamischen Übertragungselement HD auf die Bremse B und umgekehrt hier nicht notwendig.

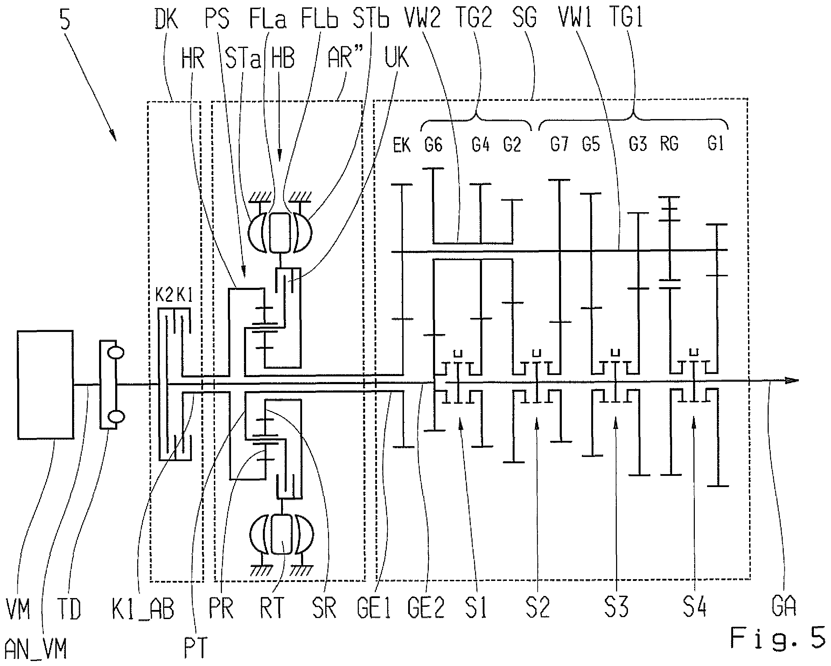

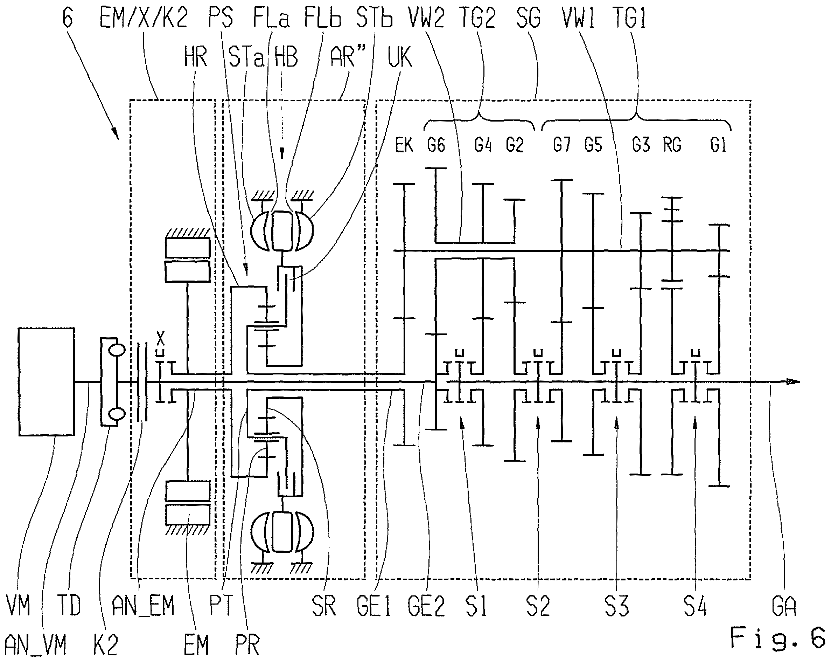

Die Fig. 5 und die Fig. 6 zeigen ein weiteres Doppelkupplungsgetriebe 5 bzw. ein weiteres nicht beanspruchtes Hybridgetriebe 6. Darin ist ein doppelflutiger Anfahrretarder AR" angeordnet. Der Aufbau und die Funktionsweise eines derartigen Anfahrretarders sind an sich aus der eingangs erwähnten DE 198 17 865 A1 bekannt. Daher beschränkt sich die Beschreibung hier auf die Anbindung an das Doppelkupplungsgetriebe 5 bzw. das Hybridgetriebe 6.

Der doppelflutige Anfahrretarder AR" weist ein hydrodynamisches Übertragungselement HB mit zwei ersten, feststehenden Funktionsrädern STa, STb, und einem zweiten, drehbaren Funktionsrad RT auf. Die beiden Statoren STa, STb stehen sich axial gegenüber. Dazwischen ist der Rotor RT angeordnet. Die Statoren STa, STb bilden mit dem Rotor RT jeweils einen Arbeitsraum FLa, FLb bzw. jeweils einen Hydraulikkreislauf für beide mögliche Rotationsrichtungen des Rotors RT. Weiterhin ist ein Planetenradsatz PS wie bei den Anfahrretardern von Fig. 1 und Fig. 3 vorgesehen. Außerdem ist eine Überbrückungskupplung UK vorgesehen. Dafür entfällt die Bremse B.

Bei dem in Fig. 5 dargestellten Doppelkupplungsgetriebe 5 ist das Hohlrad HR des Planetenradsatzes PS mit der Ausgangswelle K1_AB der ersten Kupplung K1 verbunden. Das Sonnenrad SR ist mit dem Rotor RT des hydrodynamischen Übertragungselements HB verbunden. Der Planetenträger PT ist abtriebsseitig mit der ersten Getriebeeingangswelle GE1 verbunden. Das Sonnenrad SR ist über die Überbrückungskupplung UK mit dem Planetenträger PT koppelbar.

Bei dem Doppelkupplungsgetriebe 5 kann bei geöffneter Überbrückungskupplung UK eine hydrodynamische Anfahrfunktion genutzt werden, und bei geschlossener Überbrückungskupplung UK eine hydrodynamische Retarderfunktion dargestellt werden.

Bei einem Anfahrvorgang wird das Sonnenrad SR bei einem gefüllten Arbeitsraum FLa oder FLb zunehmend abgebremst und entsprechend ein Getriebeeingangsmoment an der ersten Getriebeeingangswelle GE1 aufgebaut. Dabei findet wegen des stehenden zweiten Funktionsrades (Rotor RT) eine Momentenüberhöhung statt. Das Sonnenrad SR kann hydrodynamisch bis fast zum Stillstand abgebremst werden. Der Anfahrvorgang kann dann durch Schließen der Überbrückungskupplung UK, wodurch der Planetenradsatz PS in einen Blockumlauf übergeht, vollständig abgeschlossen werden. Bei entleertem Retarder HB ist die durch die Überbrückungskupplung UK geschaltete Retarderstellung inaktiv.

Durch Koppeln des Sonnenrads SR mit dem Planetenträger PT über die Überbrückungskupplung UK und Befüllen des hydrodynamischen Übertragungselements HB wird ein Einsatz als Retarder ermöglicht. Dabei dreht sich die Drehrichtung zwischen Stator STa bzw. Stb und Rotor RT um. Die gewünschte Bremswirkung wird dann über den anderen Arbeitsraum FLa bzw. FLb bzw. Hydraulikkreislauf erzielt.

Auch bei dieser Anordnung ist eine Lastschaltung zwischen den beiden Kupplungen K1, K2 möglich, ohne dass der Anfahrvorgang, jetzt durch Schließen der Überbrückungskupplung UK, abgeschlossen wird. Vorzugsweise ist für eine solche Lastumschaltung bei nicht abgeschlossenem Anfahrvorgang der Gangsprung zwischen einem ersten Gang G1 und einem zweiten Gang G2 in der Getriebestruktur eher klein konzipiert. Da die Überbrückungskupplung UK den Anfahrvorgang nicht zwangsläufig abschließen muss, kann diese Überbrückungskupplung UK vergleichsweise schwächer ausgelegt werden.

Nach der Lastschaltung kann die Überbrückungskupplung UK bei ausgelegtem Gang im ersten Teilgetriebe TG1 lastfrei geschlossen werden. Die Überbrückungskupplung könnte dann wie eine synchronisierte Schaltkupplung geschaltet werden, beziehungsweise entsprechend ausgebildet sein.

Möglich ist es auch, bei eingelegtem Gang im ersten Teilgetriebe TG1 durch einen Schlupfbetrieb der ersten Kupplung K1 die Überbrückungskupplung UK zu synchronisieren. Die Überbrückungskupplung UK könnte dann wie eine einfache Schaltklaue geschaltet werden bzw. entsprechend ausgebildet sein.

Bei dem in Fig. 6 dargestellten nicht beanspruchten Hybridgetriebe 6 ist das Hohlrad HR mit der Antriebswelle AN_EM der elektrischen Maschine EM verbunden, das Sonnenrad SR ist mit dem zweiten Funktionsrad des hydrodynamischen Übertragungselements HB, also mit dem Rotor RT verbunden, der Planetenträger PT ist abtriebsseitig mit der ersten Getriebeeingangswelle GE1 verbunden. Das mit dem Rotor RT verbundene Sonnenrad SR ist über die Überbrückungskupplung UK mit dem Planetenträger PT koppelbar, so dass bei geöffneter Überbrückungskupplung UK eine hydrodynamische Anfahrfunktion und bei geschlossener Überbrückungskupplung UK eine hydrodynamische Retarderfunktion nutzbar ist.

Das Hybridgetriebe 6 erlaubt ein hydrodynamisches Anfahren im rein elektromotorisch angetriebenen Fahrbetrieb. Auch ein mechanischer Anfahrvorgang ist möglich, wobei jetzt anstatt der weggefallenen Bremse B die Überbrückungskupplung UK geschlossen ist. Die Kupplung K2 des zweiten Teilgetriebes TG2 kann offen sein, um Schleppverluste zu vermeiden. Aus einem Generatorbetrieb kann verzögerungsfrei angefahren werden. Bei einem Generatorbetrieb kann ein Dauerkriechmodus genutzt werden. Der Verbrennungsmotor VM kann mit Zugkrafterhalt und Schlupfentkopplung gestartet werden. Lastschaltungen mit elektromotorischer Unterstützung sind möglich, ebenso wie Lastschaltungen im rein elektromotorisch angetriebenen Fahrbetrieb mit Hilfe der Überbrückungskupplung UK möglich sind.

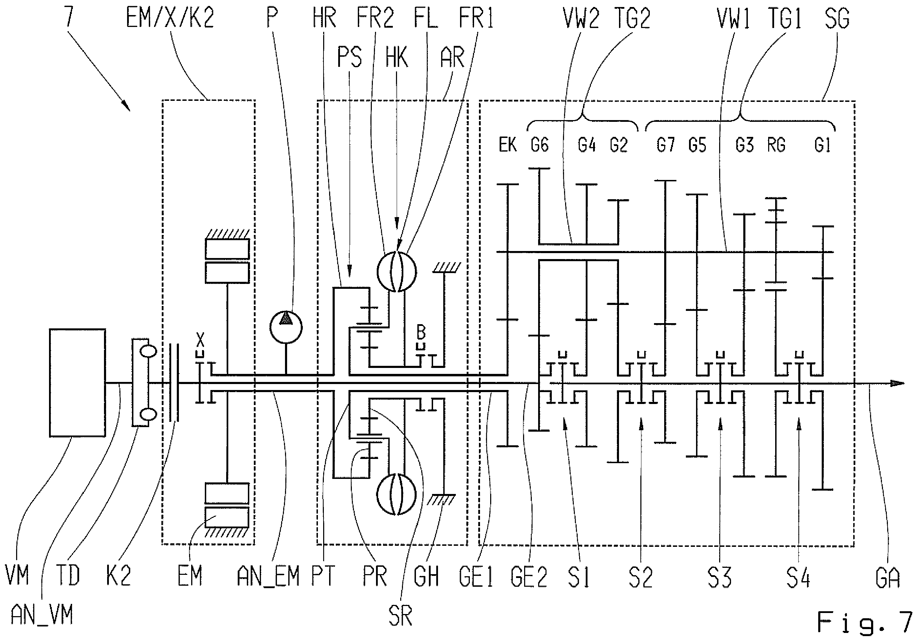

Fig. 7 zeigt ein nicht beanspruchtes Hybridgetriebe 7, welches weitgehend baugleich mit dem Hybridgetriebe von Fig. 2 ist. An der Antriebswelle AN_EM der elektrischen Maschine EM ist lediglich zusätzlich eine Hydraulikmittelpumpe P angeordnet und von dieser antreibbar. Die Hydraulikmittelpumpe P kann auch im Fahrzeugstillstand betrieben werden. Eine separat antreibbare Pumpe kann gegebenenfalls entfallen.

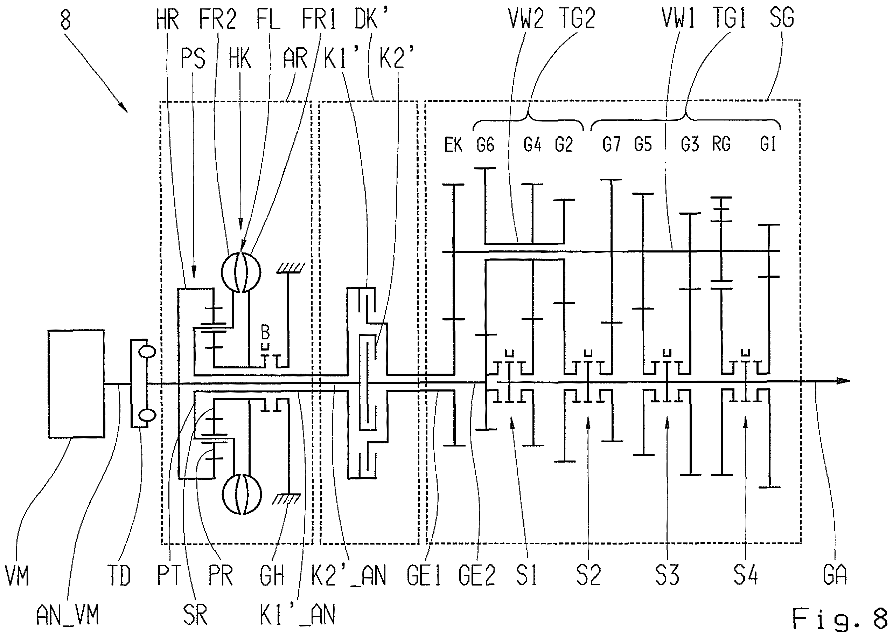

Bei den bisher gezeigten Ausführungsbeispielen ist das Doppelkupplungsmodul dem Anfahrretarder AR, AR', AR" vorgelagert. Die Fig. 8 zeigt abschließend eine weitere Antriebsvorrichtung mit einem Doppelkupplungsgetriebe 8, bei der alternativ zwei Einzelkupplungen K1', K2' zwischen dem Anfahrretarder AR und dem Schaltgetriebe SG angeordnet sind. Bei diesem Doppelkupplungsgetriebe 8 mit Anfahrretarder und mit einer dem Anfahrretarder AR antriebstechnisch nachgelagerten Doppelkupplung DK' ist das Sonnenrad SR des Planetenradsatzes PS mit dem ersten Funktionsrad FR1 des hydrodynamischen Übertragungselements HK verbunden und über das Schaltelement B an dem drehfesten Bauteil GH festsetzbar. Das Hohlrad HR ist mit dem Verbrennungsmotor VM antriebsverbunden und mit einer Kupplungseingangswelle K2'_AN der zweiten Kupplung K2' verbunden. Der Planetenträger PT ist antriebsseitig mit dem zweiten Funktionsrad FR2 drehfest verbunden und abtriebsseitig mit einer Kupplungseingangswelle K1'_AN der ersten Kupplung K1' verbunden. Die Funktionsweise ist wie bei dem Doppelkupplungsgetriebe 1 von Fig. 1.

### Bezugszeichenliste

- 1: Doppelkupplungsgetriebe
- 2: Hybridgetriebe
- 3: Doppelkupplungsgetriebe
- 4: Hybridgetriebe
- 5: Doppelkupplungsgetriebe
- 6: Hybridgetriebe
- 7: Hybridgetriebe
- 8: Doppelkupplungsgetriebe
- AR, AR', AR": Anfahrelement, Anfahrretarder
- AN_EM: Antriebswelle der elektrischen Maschine
- AN_VM: Triebwelle des Verbrennungsmotors
- B: Schaltelement, Bremse
- DK, DK': Doppelkupplung
- EK: Eingangskonstante
- EM: Elektrische Maschine
- EX/X/K2: Hybridmodul
- FL: Hydrodynamischer Arbeitsraum, Hydraulikkreis
- FLa: Hydrodynamischer Arbeitsraum, Hydraulikkreis
- FLb: Hydrodynamischer Arbeitsraum, Hydraulikkreis
- FR1: Erstes Funktionsrad
- FR2: Zweites Funktionsrad
- FR3: Drittes Funktionsrad
- G1: Erster Gang
- G2: Zweiter Gang
- G3: Dritter Gang
- G4: Vierter Gang
- G5: Fünfter Gang
- G6: Sechster Gang
- G7: Siebter Gang
- GA: Getriebeausgangswelle
- GE1: Erste Getriebeeingangswelle
- GE2: Zweite Getriebeeingangswelle
- HB: Hydrodynamisches Übertragungselement, Retarder
- HD: Hydrodynamisches Übertragungselement, Drehmomentwandler
- HK: Hydrodynamisches Übertragungselement, Strömungskupplung
- HR: Hohlrad
- K_AN: Gemeinsame Kupplungseingangswelle
- K1, K1': Erste Kupplung
- K2, K2': Zweite Kupplung
- K1_AB: Kupplungsausgangswelle
- K1'_AN: Kupplungseingangswelle
- K2'_AN: Kupplungseingangswelle
- P: Hydraulikmittelpumpe
- PR: Planetenrad
- PS: Planetenradsatz
- PT: Planetenträger
- RG: Rückwärtsgang
- RT: Rotor
- S1: Schaltpaket
- S2: Schaltpaket
- S2: Schaltpaket
- S4: Schaltpaket
- SG: Schaltgetriebe
- STa: Stator
- STb: Stator
- SR: Sonnenrad
- TD: Schwingungsdämpfer
- TG1: Erstes Teilgetriebe
- TG2: Zweites Teilgetriebe
- UK: Überbrückungskupplung
- VM: Verbrennungsmotor
- VW1: Erste Vorgelegewelle
- VW2: Zweite Vorgelegewelle
- X: Koppelschaltelement

## Patentansprüche

1. Antriebsvorrichtung eines Fahrzeugs, mit einem Verbrennungsmotor (VM) und mit einem Getriebe, das als mehrstufiges Schaltgetriebe (SG) mit zwei Teilgetrieben, einem ersten Teilgetriebe (TG1) und einem zweiten Teilgetriebe (TG2), und jeweils einer separaten Getriebeeingangswelle, einer ersten Getriebeeingangswelle (GE1) und einer zweiten Getriebeeingangswelle (GE2), ausgebildet ist, wobei der ersten Getriebeeingangswelle (GE1) des ersten Teilgetriebes (TG1) eine erste Kupplung (K1, K1'), über die die erste Getriebeeingangswelle (GE1) mit dem Verbrennungsmotor (VM) triebverbindbar ist, zugeordnet ist, und wobei der zweiten Getriebeeingangswelle (GE2) des zweiten Teilgetriebes (TG2) eine zweite Kupplung (K2) zugeordnet ist, über die die zweite Getriebeeingangswelle (GE2) mit dem Verbrennungsmotor (VM) triebverbindbar ist, **dadurch gekennzeichnet, dass** der ersten Getriebeeingangswelle (GE1) zusätzlich ein Anfahrelement (AR, AR', AR") zugeordnet ist, das einen Planetenradsatz (PS) mit einem Hohlrad (HR), einem Sonnenrad (SR) und einem Planetenträger (PT), wobei der Planetenträger (PT) mehrere Planetenräder (PR) führt, die mit dem Sonnenrad (SR) und dem Hohlrad (HR) im Verzahnungseingriff stehen, sowie ein hydrodynamisches Übertragungselement (HK, HD, HB) aufweist, welches ein erstes Funktionsrad (FR1, STa, STb) und ein zweites Funktionsrad (FR2, RT) aufweist, die einen oder zwei mit Fluid befüllbare Arbeitsräume (FL, FLa, FLb) zur Erzeugung eines hydrodynamischen Übertragungsmoments bilden, so dass mit Hilfe des Anfahrelements (AR, AR', AR") zumindest eine Anfahrfunktion realisierbar ist, die auf das erste Teilgetriebe (TG1) wirksam ist,
wobei das Anfahrelement (AR) als ein Anfahrretarder ausgebildet ist, mit dem hydrodynamischem Übertragungselement (HK), bei welchem die Funktionsräder (FR1, FR2) drehbar ausgeführt sind, und mit dem Planetenradsatz (PS), sowie mit einem Schaltelement (B) zur Fixierung eines der beiden Funktionsräder (FR1, FR2),
oder wobei das Anfahrelement (AR") als ein doppelflutiger Anfahrretarder ausgebildet ist, mit dem hydrodynamischen Übertragungselement (HB) mit zwei ersten Funktionsrädern (STa, STb), welche feststehend ausgeführt sind, und dem zweiten Funktionsrad (RT), welches drehbar ausgeführt ist, die zwei Arbeitsräume (FLa, FLb) mit zwei Hydraulikkreisläufen bilden, wobei jeweils ein Hydraulikkreislauf in einer Drehrichtung des drehbaren Funktionsrads (RT) wirksam ist, und mit dem Planetenradsatz (PS), sowie mit einer Überbrückungskupplung (UK),
wobei der Planetenradsatz (PS) sowie das hydrodynamische Übertragungselement (HK, HB) miteinander gekoppelt sind und gemeinsam eine Baueinheit bilden.

2. Antriebsvorrichtung nach Anspruch 1, **dadurch gekennzeichnet, dass** die beiden Teilgetriebe (TG1, TG2) ein Doppelkupplungsgetriebe (1) bilden, wobei die beiden Kupplungen (K1, K2) als Doppelkupplung (DK) ausgebildet sind, dem Anfahrelement (AR) antriebstechnisch vorgelagert sind, eingangsseitig mit dem Verbrennungsmotor (VM) antriebsverbunden sind, und ausgangsseitig die erste Kupplung (K1) über eine Kupplungsausgangswelle (K1_AB) mit einem Eingangselement (HR) des Planetenradsatzes (PS) drehfest verbunden ist und die zweite Kupplung (K2) mit der zweiten Getriebeeingangswelle (GE2) drehfest verbunden ist.

3. Antriebsvorrichtung nach Anspruch 2, **dadurch gekennzeichnet, dass** eines der beiden Planetenradsatzelemente Hohlrad (HR) oder Sonnenrad (SR) mit dem ersten Funktionsrad (FR1) des hydrodynamischen Übertragungselements (HK) drehfest verbunden ist sowie über das Schaltelement (B) an einem ortsfesten Bauteil (GH) festsetzbar ist, das andere der beiden Planetenradsatzelemente Hohlrad (HR) oder Sonnenrad (SR) mit einer Ausgangswelle (K1_AB) der ersten Kupplung (K1) drehfest verbunden ist, dass der Planetenträger (PT) antriebsseitig mit dem zweiten Funktionsrad (FR2) drehfest verbunden ist, und dass der Planetenträger (PT) abtriebsseitig mit der ersten Getriebeeingangswelle (GE1) drehfest verbunden ist, so dass bei geöffnetem Schaltelement (B) und geschlossener ersten Kupplung (K1) eine hydrodynamische Anfahrfunktion sowie bei geschlossenem Schaltelement (B) eine hydrodynamische Retarderfunktion eingestellt ist.

4. Antriebsvorrichtung nach einem der Ansprüche 1 bis 3, **dadurch gekennzeichnet, dass** das hydrodynamische Übertragungselement (HD) ein drittes Funktionsrad (FR3) aufweist, welches feststehend zwischen dem ersten drehbar ausgeführten Funktionsrad (FR1) und dem zweiten drehbar ausgeführten Funktionsrad (FR2) angeordnet ist, so dass durch das hydrodynamische Übertragungselement (HD) ein hydrodynamischer Drehmomentwandler gebildet ist.

5. Antriebsvorrichtung nach Anspruch 2, **dadurch gekennzeichnet, dass** bei einem doppelflutigen Anfahrretarder (AR") eines der beiden Planetenradsatzelemente Hohlrad (HR) oder Sonnenrad (SR) mit einer Ausgangswelle (K1_AB) einer ersten Kupplung (K1) drehfest verbunden ist, dass das andere der beiden Planetenradsatzelemente Hohlrad (HR) oder Sonnenrad (SR) mit dem zweiten Funktionsrad (RT) drehfest verbunden ist, dass der Planetenträger (PT) abtriebsseitig mit der ersten Getriebeeingangswelle (GE1) drehfest verbunden ist, und dass das mit dem zweiten Funktionsrad (RT) drehfest verbundene der beiden Planetenradsatzelemente Hohlrad (HR) oder Sonnenrad (SR) über die Überbrückungskupplung (UK) mit dem Planetenträger (PT) drehfest verbindbar ist, so dass bei geöffneter Überbrückungskupplung (UK) eine hydrodynamische Anfahrfunktion und bei geschlossener Überbrückungskupplung (UK) eine hydrodynamische Retarderfunktion eingestellt ist.

6. Antriebsvorrichtung nach Anspruch 1, **dadurch gekennzeichnet, dass** die beiden Teilgetriebe (TG1, TG2) ein Doppelkupplungsgetriebe (8) bilden, bei dem die zwei Kupplungen (K1', K2') vorgesehen sind, wobei die beiden Kupplungen (K1', K2') als Einzelkupplungen ausgebildet sind, dem Anfahrelement (AR) antriebstechnisch nachgelagert sind und eingangsseitig jeweils eine separate Kupplungseingangswelle (K1'_AN, K2'_AN) aufweisen, wobei die erste Kupplung (K1') eingangsseitig über ihre Kupplungseingangswelle (K1'_AN) mit einem Element (PT) des Planetenradsatzes (PS) drehfest verbunden ist sowie ausgangsseitig mit der ersten Getriebeeingangswelle (GE1) drehfest verbunden ist, und bei der die zweite Kupplung (K2 eingangsseitig über ihre Kupplungseingangswelle (K2'_AN) mit dem Verbrennungsmotor (VM) antriebsverbunden ist sowie ausgangsseitig mit der zweiten Getriebeeingangswelle (GE2) drehfest verbunden ist.

7. Antriebsvorrichtung nach Anspruch 1, **dadurch gekennzeichnet, dass** bei einem Doppelkupplungsgetriebe (8) mit Anfahrretarder (AR) und mit einer dem Anfahrretarder (AR) antriebstechnisch nachgelagerten Doppelkupplung (DK') eines der beiden Planetenradsatzelemente Hohlrad (HR) oder Sonnenrad (SR) mit dem ersten drehbar ausgeführten Funktionsrad (FR1) des hydrodynamischen Übertragungselements (HK) drehfest verbunden ist sowie über das Schaltelement (B) an einem ortsfesten Bauteil (GH) festsetzbar ist, dass das andere der beiden Planetenradsatzelemente Hohlrad (HR) oder Sonnenrad (SR) mit dem Verbrennungsmotor (VM) triebverbunden ist und mit einer Kupplungseingangswelle (K2'_AN) der zweiten Kupplung (K2) drehfest verbunden ist, und dass der Planetenträger (PT) antriebsseitig mit dem drehbar ausgeführten Funktionsrad (FR2) drehfest verbunden ist und abtriebsseitig mit einer Kupplungseingangswelle (K1'_AN) der ersten Kupplung (K1) drehfest verbunden ist, so dass bei geöffnetem Schaltelement (B) eine hydrodynamische Anfahrfunktion und bei geschlossenem Schaltelement (B) eine hydrodynamische Retarderfunktion eingestellt ist.

8. Antriebsvorrichtung nach einem der Ansprüche 1 bis 7, **dadurch gekennzeichnet, dass** die beiden Teilgetriebe (TG1, TG2) als Vorgelegegetriebe ausgebildet sind, wobei die beiden Getriebeeingangswellen (GE1, GE2) koaxial zueinander angeordnet sind, wobei eine gemeinsame Getriebeausgangswelle (GA) koaxial hinter den Getriebeeingangswellen (GE1, GE2) angeordnet ist, wobei die dem ersten Teilgetriebe (TG1) zugeordnete erste Getriebeeingangswelle (GE1) als eine äußere Hohlwelle ausgebildet ist, in der die dem zweiten Teilgetriebe (TG2) zugeordnete zweite Getriebeeingangswelle (GE2) angeordnet ist und aus dieser getriebeseitig heraustritt, wobei den Teilgetrieben (TG1, TG2) jeweils eine von zwei koaxial übereinander angeordneten Vorgelegewellen (VW1, VW2) zugeordnet ist, die mit der jeweiligen Getriebeeingangswelle (GE1, GE2) über jeweils eine Radebene (EK, G6) mit zwei im Verzahnungseingriff stehenden Zahnrädern triebverbunden ist, wobei die Teilgetriebe (TG1, TG2) weitere Radebenen (G1, G2, G3, G4, G5, G7, RG) umfassen, in denen jeweils im Verzahnungseingriff stehende Zahnräder angeordnet sind, die als Losräder oder Festräder ausgebildet sind und mit jeweils einer der Wellen (GE1, GE2, GA, VW1, VW2) drehfest verbunden oder über Schaltvorrichtungen (S1, S2, S3, S4) mit jeweils einer der Wellen (GE1, GE2, GA, VW1, VW2) drehfest verbindbar sind, so dass dem ersten Teilgetriebe (TG1) eine Ganggruppe mit ungeraden Gängen (G1, G3, G5, G7) mit zumindest einem Anfahrgang sowie zumindest einem Rückwärtsgang (RG) zugeordnet ist, und dem zweiten Teilgetriebe (TG2) zumindest eine Ganggruppe mit geraden Gängen (G2, G4, G6) zugeordnet ist.

9. Verfahren zum Betrieb einer Antriebsvorrichtung nach Anspruch 1, -beidem durch Befüllen des Arbeitsraums (FL) das hydrodynamische Übertragungsmoment aufgebaut wird, wobei eines der beiden Planetenradsatzelemente Hohlrad (HR) oder Sonnenrad (SR) als Antriebselement des Planetenradsatzes (PS) wirksam ist, welches durch den Antriebsmotor (VM) angetrieben wird, wobei das andere der beiden Planetenradsatzelemente Hohlrad (HR) oder Sonnenrad (SR), welches mit dem ersten Funktionsrad (FR1) drehfest verbunden ist und über das Schaltelement (B) an einem drehfesten Bauteil feststellbar ist, bei einem Nulldurchgang seiner Drehzahl durch Schließen des Schaltelements (B) festgestellt wird, und wobei der Planetenträger (PT), welcher mit dem zweiten Funktionsrad (FR2) drehfest verbunden ist, als Abtriebselement des Planetenradsatzes (PS) wirksam ist und die Getriebeeingangswelle (GE1) des ersten Teilgetriebes (TG1) antreibt.

10. Verfahren nach Anspruch 9, **dadurch gekennzeichnet, dass** nach dem Schließen des Schaltelements (B) durch zumindest teilweises Entleeren des Arbeitsraums (FL) das hydrodynamische Übertragungsmoment abgebaut und ein Antriebsmoment des Verbrennungsmotors (VM) entsprechend abgesenkt wird.

11. Verfahren nach Anspruch 9, **dadurch gekennzeichnet, dass** eine Retarderfunktion eingestellt wird, indem bei geschlossenem Schaltelement (B) und dadurch festgestelltem ersten Funktionsrad (FR1) durch Befüllen des Arbeitsraums (FL) das hydrodynamische Übertragungsmoment aufgebaut wird.

## Claims

1. Drive device of a vehicle, with an internal combustion engine (VM) and with a transmission which is designed as a multi-stage shift transmission (SG) with two partial transmissions, a first partial transmission (TG1) and a second partial transmission (TG2), and in each case a separate transmission input shaft, a first transmission input shaft (GE1) and a second transmission input shaft (GE2), wherein the first transmission input shaft (GE1) of the first partial transmission (TG1) is assigned a first clutch (K1, K1') via which the first transmission input shaft (GE1) can be drive-connected to the internal combustion engine (VM), and wherein the second transmission input shaft (GE2) of the second partial transmission (TG2) is assigned a second clutch (K2) via which the second transmission input shaft (GE2) can be drive-connected to the internal combustion engine (VM), **characterized in that** the first transmission input shaft (GE1) is additionally assigned a starting element (AR, AR', AR") which has a planetary gearset (PS) with a ring gear (HR), a sun gear (SR) and a planet carrier (PT), wherein the planet carrier (PT) guides a plurality of planet gears (PR) which mesh with the sun gear (SR) and the ring gear (HR), and also a hydrodynamic transmission element (HK, HD, HB) which has a first functional gear (FR1, STa, STb) and a second functional gear (FR2, RT) which form one or two fluid-fillable working spaces (FL, FLa, FLb) for producing a hydrodynamic transmission torque, with the result that the starting element (AR, AR', AR") can be used to achieve at least one starting function which is effective on the first partial transmission (TG1), wherein the starting element (AR) is designed as a starting retarder, with the hydrodynamic transmission element (HK) in which the functional gears (FR1, FR2) are rotatably designed, and with the planetary gearset (PS), and also with a shifting element (B) for fixing one of the two functional gears (FR1, FR2), or wherein the starting element (AR") is designed as a double-flow starting retarder, with the hydrodynamic transmission element (HB) with two first functional gears (STa, STb), which are fixedly designed, and the second functional gear (RT), which is rotatably designed, which form two working spaces (FLa, FLb) with two hydraulic circuits, wherein in each case a hydraulic circuit is effective in a direction of rotation of the rotatable functional gear (RT), and with the planetary gearset (PS), and also with a lock-up clutch (UK), wherein the planetary gearset (PS) and also the hydrodynamic transmission element (HK, HB) are coupled to one another and jointly form a structural unit.

2. Drive device according to Claim 1, **characterized in that** the two partial transmissions (TG1, TG2) form a double clutch transmission (1), wherein the two clutches (K1, K2) are designed as a double clutch (DK), are mounted upstream of the starting element (AR) in the drive train, are drive-connected to the internal combustion engine (VM) on the input side, and, on the output side, the first clutch (K1) is connected for conjoint rotation to an input element (HR) of the planetary gearset (PS) via a clutch output shaft (K1_AB) and the second clutch (K2) is connected for conjoint rotation with the second transmission input shaft (GE2).

3. Drive device according to Claim 2, **characterized in that** one of the two planetary gearset elements ring gear (HR) or sun gear (SR) is connected for conjoint rotation with the first functional gear (FR1) of the hydrodynamic transmission element (HK) and can be fixed on a positionally fixed component (GH) via the shifting element (B), the other of the two planetary gearset elements ring gear (HR) or sun gear (SR) is connected for conjoint rotation with an output shaft (K1_AB) of the first clutch (K1), **in that** the planet carrier (PT) is connected for conjoint rotation with the second functional gear (FR2) on the drive side, and **in that** the planet carrier (PT) is connected for conjoint rotation with the first transmission input shaft (GE1) on the output side, such that, with the shifting element (B) opened and the first clutch (K1) closed, a hydrodynamic starting function is established and also, with the shifting element (B) closed, a hydrodynamic retarder function is established.

4. Drive device according to one of Claims 1 to 3, **characterized in that** the hydrodynamic transmission element (HD) has a third functional gear (FR3) which is arranged fixedly between the first rotatably designed functional gear (FR1) and the second rotatably designed functional gear (FR2), such that a hydrodynamic torque converter is formed by the hydrodynamic transmission element (HD).

5. Drive device according to Claim 2, **characterized in that**, in the case of a double-flow starting retarder (AR"), one of the two planetary gearset elements ring gear (HR) or sun gear (SR) is connected for conjoint rotation with an output shaft (K1_AB) of a first clutch (K1), **in that** the other of the two planetary gearset elements ring gear (HR) or sun gear (SR) is connected for conjoint rotation with the second functional gear (RT), **in that** the planet carrier (PT) is connected for conjoint rotation with the first transmission input shaft (GE1) on the output side, and **in that** the element of the two planetary gearset elements ring gear (HR) or sun gear (SR) that is connected for conjoint rotation with the second functional gear (RT) can be connected for conjoint rotation with the planet carrier (PT) via the lock-up clutch (UK), such that, with the lock-up clutch (UK) opened, a hydrodynamic starting function is established and, with the lock-up clutch (UK) closed, a hydrodynamic retarder function is established.

6. Drive device according to Claim 1, **characterized in that** the two partial transmissions (TG1, TG2) form a double clutch transmission (8) in which the two clutches (K1', K2') are provided, wherein the two clutches (K1', K2') are formed as single clutches, are mounted downstream of the starting element (AR) in the drive train and each have a separate clutch input shaft (K1'_AN, K2'_AN) on the input side, wherein the first clutch (K1') is connected, on the input side, for conjoint rotation with an element (PT) of the planetary gearset (PS) via its clutch input shaft (K1'_AN) and is connected, on the output side, for conjoint rotation with the first transmission input shaft (GE1), and in which the second clutch (K2) is drive-connected, on the input side, to the internal combustion engine (VM) via its clutch input shaft (K2'_AN) and is connected, on the output side, for conjoint rotation with the second transmission input shaft (GE2).

7. Drive device according to Claim 1, **characterized in that**, in the case of a double clutch transmission (8) with starting retarder (AR) and with a double clutch (DK') mounted downstream of the starting retarder (AR) in the drive train, one of the two planetary gearset elements ring gear (HR) or sun gear (SR) is connected for conjoint rotation with the first rotatably designed functional gear (FR1) of the hydrodynamic transmission element (HK) and can be fixed on a positionally fixed component (GH) via the shifting element (B), **in that** the other of the two planetary gearset elements ring gear (HR) or sun gear (SR) is drive-connected to the internal combustion engine (VM) and is connected for conjoint rotation with a clutch input shaft (K2'_AN) of the second clutch (K2), and **in that** the planet carrier (PT) is connected, on the drive side, for conjoint rotation with the rotatably designed functional gear (FR2) and is connected, on the output side, for conjoint rotation with a clutch input shaft (K1'_AN) of the first clutch (K1), such that, with the shifting element (B) opened, a hydrodynamic starting function is established and, with the shifting element (B) closed, a hydrodynamic retarder function is established.

8. Drive device according to one of Claims 1 to 7, **characterized in that** the two partial transmissions (TG1, TG2) are designed as countershaft transmissions, wherein the two transmission input shafts (GE1, GE2) are arranged coaxially to one another, wherein a common transmission output shaft (GA) is arranged coaxially behind the transmission input shafts (GE1, GE2), wherein the first transmission input shaft (GE1) assigned to the first partial transmission (TG1) is designed as an outer hollow shaft in which the second transmission input shaft (GE2) assigned to the second partial transmission (TG2) is arranged and emerges therefrom on the transmission side, wherein the partial transmissions (TG1, TG2) are each assigned one of two countershafts (VWl, VW2) arranged coaxially over one another, which is drive-connected to the respective transmission input shaft (GE1, GE2) via in each case a gear plane (EK, G6) with two meshing gearwheels, wherein the partial transmission (TG1, TG2) comprise further gear planes (G1, G2, G3, G4, G5, G7, RG) in each of which meshing gearwheels are arranged which are designed as movable gears or fixed gears and are connected for conjoint rotation with in each case one of the shafts (GE1, GE2, GA, VW1, VW2) or can be connected for conjoint rotation with in each case one of the shafts (GE1, GE2, GA, VW1, VW2) via shifting devices (S1, S2, S3, S4), with the result that the first partial transmission (TG1) is assigned a gear group with odd gears (G1, G3, G5, G7) with at least one starting gear and at least one reverse gear (RG), and the second partial transmission (TG2) is assigned at least one gear group with even gears (G2, G4, G6).

9. Method for operating a drive device according to Claim 1, in which the hydrodynamic transmission torque is built up by filling the working space (FL), wherein one of the two planetary gearset elements ring gear (HR) or sun gear (SR) is effective as a drive element of the planetary gearset (PS) which is driven by the drive engine (VM), wherein the other of the two planetary gearset elements ring gear (HR) or sun gear (SR) which is connected for conjoint rotation with the first functional gear (FR1) and can be fixed on a rotationally fixed component via the shifting element (B) is fixed at a zero transition of its rotational speed by closing the shifting element (B), and wherein the planet carrier (PT) which is connected for conjoint rotation with the second functional gear (FR2) is effective as an output element of the planetary gearset (PS) and drives the transmission input shaft (GE1) of the first partial transmission (TG1).

10. Method according to Claim 9, **characterized in that**, after closing the shifting element (B), by at least partially emptying the working space (FL), the hydrodynamic transmission torque is reduced and a drive torque of the internal combustion engine (VM) is correspondingly lowered.

11. Method according to Claim 9, **characterized in that** a retarder function is established **in that**, with the shifting element (B) closed and the first functional gear (FR1) thus fixed, the hydrodynamic transmission torque is built up by filling the working space (FL).

## Revendications

1. Ensemble d'entraînement pour véhicule, l'ensemble présentant
un moteur à combustion interne (VM) et une transmission configurée comme transmission (SG) à plusieurs rapports dotée de deux transmissions partielles, à savoir une première transmission partielle (TG1) et une deuxième transmission partielle (TG2) présentant chacune un arbre d'entrée de transmission séparé, à savoir un premier arbre (GE1) d'entrée de transmission et un deuxième arbre (GE2) d'entrée de transmission,
un premier embrayage (K1, K1') par lequel le premier arbre (GE1) d'entrée de transmission peut être relié à entraînement au moteur à combustion interne (VM) étant associé au premier arbre (GE1) d'entrée de transmission de la première transmission partielle (TG1) et un deuxième embrayage (K2) par lequel le deuxième arbre (GE2) d'entrée de transmission peut être relié à entraînement au moteur à combustion interne (VM) étant associé au deuxième arbre (GE2) d'entrée de transmission de la deuxième transmission partielle (TG2),
**caractérisé en ce que**
un élément de démarrage (AR, AR', AR'') est de plus associé au premier arbre (GE1) d'entrée de transmission et présente
un jeu (PS) de roues planétaires doté d'une roue creuse (HR), d'une roue solaire (SR) et d'un porte-planétaires (PT), le porte-planétaires (PT) guidant plusieurs roues planétaires (PR) qui s'engrènent sur la roue solaire (SR) et la roue creuse (HR), et
un élément hydrodynamique de transfert (HK, HD, HB) qui présente une première roue fonctionnelle (FR1, STa, STb) et une deuxième roue fonctionnelle (FR2, RT) qui forment un ou deux espaces de travail (FL, FLa, FLb) aptes à être remplis de fluide en vue de former un couple hydrodynamique de transfert de telle sorte qu'au moins une fonction de démarrage puisse être réalisée à l'aide de l'élément de démarrage (AR, AR', AR'') et puisse agir sur la première transmission partielle (TG1),
**en ce que** l'élément de démarrage (AR) est configuré comme élément retardateur de démarrage avec l'élément hydrodynamique de transfert (HK), les roues fonctionnelles (FR1, FR2) pouvant tourner et le jeu (PS) de roues planétaires ainsi qu'un élément (B) de changement de rapport qui fixe l'une des deux roues fonctionnelles (FR1, FR2),
ou **en ce que** l'élément de démarrage (AR") est configuré comme élément retardateur de démarrage à deux étages, avec l'élément hydrodynamique de transfert (HB) et deux premières roues fonctionnelles (STa, STb) fixes, avec la deuxième roue fonctionnelle (RT) apte à tourner, qui forme deux espaces de travail (FLa, FLb) présentant deux circuits hydrauliques, chaque circuit hydraulique agissant dans un sens de rotation de la roue fonctionnelle rotative (RT), et avec le jeu (PS) de roues planétaires ainsi qu'un embrayage de pontage (UK) et
**en ce que** le jeu (PS) de roues planétaires et l'élément hydrodynamique de transfert (HK, HB) sont accouplés l'un à l'autre et forment ensemble un module.

2. Dispositif d'entraînement selon la revendication 1, **caractérisé en ce que** les deux transmissions partielles (TG1, TG2) forment une transmission (1) à double embrayage, les deux embrayages (K1, K2) étant configurés comme doubles embrayages (DK) raccordés en amont de l'élément de démarrage (AR) dans le train de transmission, raccordés à entraînement par leur entrée au moteur à combustion interne (VM), le premier embrayage (K1) étant relié par sa sortie à rotation solidaire à un élément d'entrée (HR) du jeu (PS) de roues planétaires par l'intermédiaire d'un arbre (K1_AB) de sortie d'embrayage et le deuxième embrayage (K2) étant relié à rotation solidaire au deuxième arbre (GE2) d'entrée de transmission.

3. Dispositif d'entraînement selon la revendication 2, **caractérisé en ce que** l'un des deux éléments du jeu de roues planétaires que sont la roue creuse (HR) et la roue solaire (SR) est relié à rotation solidaire à la première roue fonctionnelle (FR1) de l'élément hydrodynamique de transfert (HK) et peut être immobilisé par l'intermédiaire de l'élément de commutation (B) sur un composant fixe (GH), l'autre des deux éléments du jeu de roues planétaires que sont la roue creuse (HR) et la roue solaire (SR) étant relié à rotation solidaire à un arbre de sortie (K1_AB) du premier embrayage (K1),
**en ce que** le porte-planétaires (PT) est relié à rotation solidaire à la deuxième roue fonctionnelle (FR2) du côté de l'entraînement et
**en ce que** le porte-planétaires (PT) est relié à rotation solidaire au premier arbre (GE1) d'entrée de transmission du côté entraîné, de telle sorte que lorsque l'élément (B) de changement de rapport est ouvert et que le premier embrayage (K1) est fermé s'établisse une fonction hydrodynamique de démarrage et que lorsque l'élément (B) de changement de rapport est fermé s'établisse une fonction hydrodynamique de retardement.

4. Ensemble d'entraînement selon l'une des revendications 1 à 3, **caractérisé en ce que** l'élément hydrodynamique de transfert (HD) présente une troisième roue fonctionnelle (FR3) fixe disposée entre la première roue fonctionnelle (FR1) rotative et la deuxième roue fonctionnelle (FR2) rotative, de telle sorte qu'un convertisseur hydrodynamique de couple de rotation soit formé par l'élément hydrodynamique de transfert (HD).

5. Dispositif d'entraînement selon la revendication 2, **caractérisé en ce que** dans le cas d'un élément retardateur de démarrage (AR'') à double étage, l'un des deux éléments du jeu de roues planétaires que sont la roue creuse (HR) et la roue solaire (SR) est relié à rotation solidaire à l'arbre de sortie (K1_AB) d'un premier embrayage (K1), **en ce que** l'autre des deux éléments du jeu de roues planétaires que sont la roue creuse (HR) et la roue solaire (SR) est relié à rotation solidaire à la deuxième roue fonctionnelle (RT), **en ce que** le porte-planétaires (PT) est relié à rotation solidaire du côté entraîné au premier arbre (GE1) d'entrée de transmission et **en ce que** celui des deux éléments du jeu de roues planétaires que sont la roue creuse (HR) et la roue solaire (SR) qui est relié à rotation solidaire à la deuxième roue fonctionnelle (RT) peut être relié à rotation solidaire au porte-planétaires (PT) par l'intermédiaire de l'embrayage de pontage (UK), de telle sorte que lorsque l'embrayage de pontage (UK) est ouvert s'établisse une fonction hydrodynamique de démarrage et que lorsque l'embrayage de pontage (UK) est fermé s'établisse une fonction hydrodynamique de retardement.

6. Ensemble d'entraînement selon la revendication 1, **caractérisé en ce que** les deux transmissions partielles (TG1, TG2) forment une transmission (8) à double embrayage dans laquelle les deux embrayages (K1', K2') sont prévus, les deux embrayages (K1', K2) étant configurés comme embrayages simples raccordés en aval de l'élément de démarrage (AR) dans le train d'entraînement et présentant côté entrée un arbre séparé (K1'_AN, K2'_AN) d'entrée d'embrayage, le premier embrayage (K1') étant relié à rotation solidaire du côté de son entrée à un élément (PT) du jeu (PS) de roues planétaires par l'intermédiaire de son arbre (K1'_AN) d'entrée d'embrayage et étant relié à rotation solidaire du côté de sa sortie au premier arbre (GE1) d'entrée de transmission, le deuxième embrayage (K2) étant relié à entraînement du côté de son entrée au moteur à combustion interne (VM) par l'intermédiaire de son arbre (K2'_AN) d'entrée d'embrayage et étant relié à rotation solidaire au deuxième arbre (GE2) d'entrée de transmission du côté de sa sortie.

7. Ensemble d'entraînement selon la revendication 1, **caractérisé en ce que** dans le cas d'une transmission (8) à double embrayage et élément retardateur de démarrage (AR) ainsi qu'un double embrayage (DK') prévu en aval de l'élément retardateur d'entraînement (AR) dans le train d'entraînement, l'un des deux éléments du jeu de roues planétaires que sont la roue creuse (HR) et la roue solaire (SR) est relié à rotation solidaire à la première roue fonctionnelle (FR1) apte à tourner de l'élément hydrodynamique de transfert (HK) et peut être immobilisé par l'intermédiaire de l'élément (B) de changement de rapport à un composant fixe (GH), **en ce que** l'autre des deux éléments du jeu de roues planétaires que sont la roue creuse (HR) et la roue solaire (SR) est relié à entraînement au moteur à combustion interne (VM) et est relié à rotation solidaire à un arbre (K2'_AN) d'entrée d'embrayage du deuxième embrayage (K2) et **en ce que** le porte-planétaires (PT) est relié à rotation solidaire du côté entraînement à la roue fonctionnelle (FR2) apte à tourner et est raccordé à rotation solidaire du côté entraîné à un arbre (K1'_AN) d'entrée d'embrayage du deuxième embrayage (K1) de telle sorte que lorsque l'élément (B) de changement de rapport est ouvert, une fonction hydrodynamique de démarrage soit établie et que lorsque l'élément (B) de changement de rapport est fermé, une fonction hydrodynamique de retardement soit établie.

8. Ensemble d'entraînement selon l'une des revendications 1 à 7, **caractérisé en ce que** les deux transmissions partielles (TG1, TG2) sont configurées comme transmissions amont dans laquelle les deux arbres (GE1, GE2) d'entrée de transmission sont disposés coaxialement l'un par rapport à l'autre, un arbre commun (GA) de sortie de transmission étant disposé coaxialement à la suite des arbres (GE1, GE2) d'entrée de transmission, le premier arbre (GE1) d'entrée de transmission associé à la première transmission partielle (TG1) étant configuré comme arbre creux extérieur dans lequel le deuxième arbre (GE2) d'entrée de transmission associé à la deuxième transmission partielle (TG2) est disposé et sort de ce dernier côté transmission, un de deux arbres amont (VW1, VW2) disposé coaxialement l'un au-dessus de l'autre étant associé aux transmissions partielles (TG1, TG2) et étant relié à entraînement à l'arbre (GE1, GE2) d'entrée de transmission par l'intermédiaire d'un plan de roue (EK, G6) présentant deux pignons dentés s'engrenant l'un dans l'autre, les transmissions partielles (TG1, TG2) comprenant d'autres plans de roues (G1, G2, G3, G4, G5, G6, G7, RG) dans chacun desquels sont disposés deux pignons dentés s'engageant l'un dans l'autre, configurés comme pignons libres ou comme pignons fixes et reliés à rotation solidaire à l'un des arbres (GE1, GE2, GA, VW1, VW2) ou pouvant être reliés à rotation solidaire à l'un des arbres (GE1, GE2, GA, VW1, VW2) par l'intermédiaire d'ensembles (S1, S2, S3, S4) de changement de rapport de telle sorte qu'un groupe de rapports présentant des rapports impairs (G1, G3, G5, G7) présentant au moins un rapport de démarrage ainsi qu'au moins un rapport de recul (RG) est associé à la première transmission partielle (TG1), au moins un groupe de rapports présentant des rapports pairs (G2, G4, G6) étant associé à la deuxième transmission partielle (TG2).

9. Procédé de conduite d'un ensemble d'entraînement selon la revendication 1, dans lequel, le couple hydrodynamique de transfert est établi par remplissage de l'espace de travail (FL), l'un des deux éléments du jeu de roues planétaires que sont la roue creuse (HR) et la roue solaire (SR) agissant comme un élément d'entraînement du jeu (PS) de roues planétaires qui est entraîné par le moteur d'entraînement (VM), l'autre des deux éléments du jeu de roues planétaires que sont la roue creuse (HR) et la roue solaire (SR) qui peut être raccordé à rotation solidaire à la première roue fonctionnelle (FR1) et peut être immobilisé sur un composant non rotatif par l'intermédiaire de l'élément (B) de changement de rapport définissant sa vitesse de rotation lors d'un passage par le neutre par fermeture de l'élément (B) de changement de rapport, le porte-planétaires (PT) relié à rotation solidaire à la deuxième roue fonctionnelle (FR2) agissant comme élément d'entraînement du jeu (PS) de roues planétaires et entraînant l'arbre (GE1) d'entrée de transmission de la première transmission partielle (TG1).

10. Procédé selon la revendication 9, **caractérisé en ce qu'**après la fermeture de l'élément (B) de changement de rapport, une vidange au moins partielle de l'espace de travail (FL) a pour effet la disparition du couple hydrodynamique de transfert, le couple d'entraînement du moteur à combustion interne (VM) étant abaissé en correspondance.

11. Procédé selon la revendication 9, **caractérisé en ce qu'**une fonction de retardement est établie en établissant le couple hydrodynamique de transfert par remplissage de la chambre de travail (FL) lorsque l'élément (B) de changement de rapport est fermé et que donc la première roue fonctionnelle (FR1) est immobilisée.
